# EUROPÄISCHE PATENTSCHRIFT

(11) **EP 3 844 085 B1**
(45) Veröffentlichungstag und Bekanntmachung des Hinweises auf die Patenterteilung: **24.11.2021**
(21) Anmeldenummer: 19742009.4
(22) Anmeldetag: 15.07.2019
(51) Int. Cl.: B65G 47/86

(54) **VORRICHTUNG ZUM GREIFEN VON BEHÄLTERN**
DEVICE FOR GRIPPING CONTAINERS
DISPOSITIF DE PRÉHENSION DE RÉCIPIENTS

(30) Priorität: 29.08.2018 DE 102018121092
(43) Veröffentlichungstag der Anmeldung: 07.07.2021
(73) Patentinhaber: KHS GmbH, 44143 Dortmund (DE)
(72) Erfinder: FAHLDIECK, Andreas, 55743 Idar-Oberstein (DE); SCHUG, Nils, 55499 Riesweiler (DE)
(86) Internationale Anmeldenummer: PCT/EP2019/069008
(87) Internationale Veröffentlichungsnummer: WO 2020/043388

(56) Entgegenhaltungen:
- WO-A1-2016/071198
- WO-A2-2015/082381
- IT-A1- TO20 120 298
- US-A1- 2011 266 818

## Beschreibung

Die Erfindung betrifft eine Vorrichtung zum Transport von Behältern umfassend einen Tragkörper, an dem eine Behälterklammer mit zwei um jeweils eine Schwenkachse verschwenkbar gelagerten Greifarmen zum Halten eines Behälters angeordnet ist, und eine um eine Drehachse drehbare Steuereinheit zum Ansteuern der Greifarme.

Transportvorrichtungen mit Behälterklammern zum Transport von Behältern, wie beispielsweise Flaschen, sind in verschiedenen Ausgestaltungen aus dem Stand der Technik bekannt. Diese werden beispielsweise im Bereich der Nahrungsmittel verarbeitenden Industrie verwendet, um Behälter wie die Getränkeflaschen während ihrer Herstellung, Befüllung oder auch Reinigung zu halten. Dabei müssen Behälterklammern besonders einfach aufgebaut und leicht reinigbar sein, um die hohen hygienischen Anforderungen erfüllen zu können.

Eine Behälterklammer mit einem einfachen strukturellen Aufbau ist beispielsweise aus der Druckschrift WO 2006/102983 A2 bekannt. Diese Behälterklammer weist zwei drehbar gelagerte Greifarme auf, an deren freien Enden ein Sperrelement zwischen zwei elastische Abschnitte der Greifarme geschoben wird, um die Greifarme an dem Behälter zu halten. Nachteile an dieser bekannten Behälterklammer sind bspw. die schwer steuerbare Haltekraft und die fehlende Selbsthemmung der Klammer gegen ein unbeabsichtigtes Aufgehen.

Weitere Behälterklammern sind u.a. aus den Druckschriften IT TO20 120 298 A1, WO 2015/082381 A2 und US 2011/266818 A1 bekannt.

Ferner offenbart die Druckschrift WO 2016/071198 A1 eine Vorrichtung zum Transport von Behältern, umfassend einen Tragkörper mit einer zwei Greifarme aufweisenden Behälterklammer zum Halten eines Behälters an dessen Schulter-, Hals- oder Neckbereich, eine am Tragkörper gelagerte Steuereinheit zum Ansteuern der Greifarme und eine mit der Steuereinheit gekoppelte Ansteuervorrichtung zum Ansteuern durch eine Steuerkurve, wobei jeder Greifarm um eine Schwenkachse verschwenkbar an dem Tragkörper gelagert ist und am äußeren Ende einen Greifabschnitt zur Aufnahme des Behälters aufweist. Außerdem umfasst die Steuereinheit einen gelagerten Grundkörper mit Steuerbolzen, wobei jeder Steuerbolzen in eine jeweilige Steuernut der Greifarme eintaucht bzw. mit dieser formschlüssig verbunden ist. Mit einer Bewegung der Steuereinheit werden die Steuerbolzen in den Steuernuten bewegt und die Greifarme zwischen einer Öffnungsstellung und einer Greifstellung um die Schwenkachse verschwenkt.

Der Erfindung liegt die Aufgabe zugrunde, eine Transportvorrichtung mit einer strukturell einfach aufgebauten, leicht reinigbaren Behälterklammer bereitzustellen, die einen kleinen Bauraum benötigt, besonders genau steuerbar ist und einen Schutz gegen ein unbeabsichtigtes Aufgehen aufweist.

Die Erfindung löst die Aufgabe durch eine Vorrichtung zum Transport von Behältern mit den Merkmalen des Anspruchs 1. Vorteilhafte Weiterbildungen der Erfindung sind in den abhängigen Ansprüchen angegeben.

Die erfindungsgemäße Vorrichtung zum Transport von Behältern umfasst einen Tragkörper mit einer zwei Greifarme aufweisenden Behälterklammer zum Halten eines Behälters an dessen Schulter-, Hals- oder Neckbereich, wobei jeder Greifarm um eine vertikale Schwenkachse verschwenkbar an dem Tragkörper gelagert ist und eine um eine Drehachse drehbare, am Tragkörper gelagerte Steuereinheit zum Ansteuern der Greifarme angeordnet ist und eine mit der Steuereinheit gekoppelte Ansteuervorrichtung zum Ansteuern durch eine Steuerkurve vorgesehen ist, wobei jeder Greifarm an einem äußeren Ende einen Greifabschnitt zur Aufnahme des Behälters und an einem dem äußeren Ende gegenüberliegenden inneren Ende jeweils eine Steuernut aufweist, wobei zwischen den beiden Enden die jeweilige Schwenkachse angeordnet ist und die Steuereinheit einen drehbar gelagerten Grundkörper mit angeordneten Steuerbolzen umfasst, und jeder Steuerbolzen in der jeweiligen Steuernut in einem der Greifarme beweglich gelagert ist, sodass mit einer Drehbewegung der Steuereinheit die Steuerbolzen in den Steuernuten in entgegengesetzte Richtung bewegt und die Greifarme zwischen einer Öffnungsstellung und einer Greifstellung um die Schwenkachse verschwenkt werden.

Die erfindungsgemäße Ausgestaltung der Vorrichtung mit einer um eine einzelne Drehachse drehbaren Steuereinheit und einer Kraftübertragung der Steuereinheit auf die Greifarme mittels zweier Steuerbolzen und zweier Steuernuten ermöglichen in vorteilhafter Weise eine besonders exakte Steuerung der Öffnungs- und Schließbewegung der Greifarme und der hierfür aufzuwenden Kraft. Zudem wird eine selbsthemmende Wirkung erreicht, die das unbeabsichtigte Öffnen der Greifarme sicher verhindert. Der strukturelle Aufbau der Vorrichtung bleibt weiterhin sehr einfach und umfasst nur wenige Hauptbauteile, wodurch die einfache Reinigbarkeit weiterhin gegeben ist.

Auch wird über die einzelne Drehachse für die Steuereinheit mit der Kraftübertragung auf zwei Steuerbolzen erreicht, dass keine schwer zu reinigenden Linearführungen vorhanden sind und der notwendige Drehwinkel zum Öffnen und Schließen der Greifarme besonders klein ist, wodurch der Verschleiß an den beweglichen Teilen deutlich verringert wird.

Unter einer Vorrichtung zum Transport werden Vorrichtungen verstanden, die den leeren und/oder vollen Behälter durch eine Behälterbehandlungsanlage transportieren. Insbesondere werden unter den Vorrichtungen Transportvorrichtungen verstanden, die den Behälter durch eine Behälterbehandlungsstation oder aus einer Behälterbehandlungsstation heraus bzw. in eine Behälterbehandlungsstation hinein transportieren. Die Transportvorrichtung ist zum Transport von stehenden oder im sogenannten Neckhandling, also unter dem Neckring der Flaschenmündung gehaltenen und meist hängenden, Behältern ausgebildet.

Unter einem Tragkörper wird ein Grundkörper verstanden, der die Behälterklammer und die Steuereinheit trägt. Dabei erfolgt die Lagerung am Tragkörper ausschließlich über die Schwenkachsen und die Drehachse, die am Tragkörper drehbar gelagert sind. Die Schwenkachsen sind dabei vertikal ausgerichtet. Darunter wird verstanden, dass die Schwenkachsen senkrecht auf einer Ebene des Tragkörpers stehen. Da der Tragkörper in seiner Einbaulage mit seiner Ebene üblicherweise horizontal ausgerichtet ist, sind die Schwenkachsen in ihrer Einbaulage vertikal ausgerichtet.

Unter Behälterklammern werden Vorrichtungen zum Erfassen von einzelnen Behältern verstanden. Die Behälterklammern können den Behälter alleine halten oder der Behälter stützt sich mit seinem Behälterboden oder seinen Außenflächen auf einem weiteren Bauteil der Vorrichtung oder einer angrenzenden Vorrichtung, bspw. zur Aufnahme auftretender Fliehkräfte ab, sodass die Behälterklammer den Behälter bspw. vor einem Umfallen schützt.

Zum Halten des Behälters wirken die jeweils um ihre Schwenkachse drehbaren Greifarme einer Behälterklammer gemeinsam und umfassen den Behälter zumindest abschnittsweise. Dabei umgreifen die Greifarme den Behälter im Halsbereich oder Neckbereich, d.h. an einem Bereich zwischen der Behälteröffnung und der Behälterschulter.

Unter Behältern werden vor allem Getränkebehälter, wie Getränkeflaschen, insbesondere Getränkeflaschen mit Neckring verstanden.

In der Öffnungsstellung sind die Greifarme auseinandergespreizt und ein Behälter ist in die Behälterklammer, d. h. zwischen die Greifarme bewegbar. Dementsprechend wird unter der Greifstellung eine Stellung verstanden, in der die Greifarme zumindest weitestgehend geschlossen sind und eine Stellung eingenommen haben, in der sie einen Behälter halten können. Die Greifarme erfassen den Behälter mit einem Greifabschnitt, der bspw. auf die Form des Halsbereichs oder Neckbereichs des Behälters, an den die Greifarme ansetzen, abgestimmt ist.

Unter dem Greifabschnitt sind somit jeweils die Abschnitte der Greifarme zu verstehen, die beim Halten des Behälters mit dem Behälter in Kontakt kommen. Die Greifabschnitte sind an einem ersten freien Ende der Greifarme angeordnet. Aufgrund der hauptsächlichen Verwendung der Behälterklammer an einem Transportstern, bei der die Greifabschnitte (erstes freies Ende) in radialer Richtung nach außen zeigen, sind die ersten freien Enden als äußere Enden bezeichnet. Die den ersten freien Enden gegenüberliegenden zweiten freien Enden zeigen dabei in radialer Richtung nach innen in Richtung einer Transportsterndrehachse und, werden als innere Enden bezeichnet . Transportsterne sind Bauteile einer Behältertransportvorrichtung, die einen rotativen Transport der Behälter durchführen.

In jeder Steuernut eines Greifarms ist jeweils ein Steuerbolzen angeordnet. Steuernut und Steuerbolzen sind vorzugsweise als Kulissensteuerung (Kulissenführung mit Kulissenstein) ausgebildet. Dabei sind die Steuernuten an den den Greifabschnitten (äußere Enden) gegenüberliegenden zweiten freien Enden (innere Enden) der Greifarme und die jeweilige Schwenkachse zwischen dem Greifabschnitt und der Steuernut angeordnet. Die Steuernuten können bspw. am zweiten freien Ende offen ausgebildet sein, sind vorzugsweise jedoch als geschlossene Steuernuten ausgebildet. In geschlossenen Steuernuten können die Steuerbolzen nur quer zu ihrer Bewegungsrichtung in der Steuernut, insbesondere senkrecht zur Ebene des jeweiligen Greifarms, aus der Steuernut herausbewegt werden.

Ein kleiner Bauraum der Vorrichtung wird erfindungsgemäß unter anderem durch eine Anordnung der Steuerbolzen erreicht, aufgrund der sich die Steuerbolzen bei der Drehbewegung der Steuereinheit in den Steuernuten in entgegengesetzte Richtung bewegen. Hierfür erstrecken sich die Steuernuten zumindest weitestgehend in Längsachsenrichtung der Greifarme bzw. in Längsachsenrichtung der mittleren Längsachse der Behälterklammer, bei einem Transportstern somit beispielsweise in weitestgehend radialer Richtung. In Bezug auf die Steuerbolzen bedeutet dies, dass in einer Ausgangsposition, beispielsweise der Öffnungsstellung der Greifarme, einer der Steuerbolzen in einem zum inneren Ende eines ersten Greifarms zeigenden Abschnitt der Steuernut und der zweite Steuerbolzen in einem Abschnitt der Steuernut des zweiten Greifarms angeordnet ist, der zum äußeren Ende (Greifabschnitt) zeigt. Selbstverständlich kann die Anordnung auch andersherum erfolgen.

Aufgrund der Drehbewegung der Steuereinheit um ihre Drehachse bewegt sich der Steuerbolzen, der in einem zum inneren Ende ausgerichteten Abschnitt einer Steuernut eines ersten Greifarms vorliegt, in Richtung des äußeren Endes der Steuernut des ersten Greifarmes, während der zweite Steuerbolzen sich in der Steuernut in Richtung des inneren Endes des zweiten Greifarms bewegt. D. h. beispielsweise bei einem Transportstern, dass sich einer der Steuerbolzen zumindest weitestgehend in Richtung radial nach außen und der andere Steuerbolzen zumindest weitestgehend in Richtung radial nach innen (in Richtung zur Drehachse des Transportsterns) bewegt. Die Bewegung der Steuerbolzen erfolgt dabei gleichzeitig.

Zum Einleiten der Drehbewegung der Steuereinheit ist eine Ansteuervorrichtung zum Ansteuern der Steuereinheit angeordnet. Die Ansteuervorrichtung umfasst vorzugsweise eine Steuerrolle, die mittels einer Steuerkurve bewegt wird. Die Steuerkurve ist feststehend an einem nicht drehenden Teil der Transportvorrichtung angeordnet.

Die Ansteuervorrichtung ist mit der Steuereinheit derart gekoppelt, dass die erzeugte Bewegung der Steuerrolle in die Drehbewegung der Steuereinheit um ihre Drehachse umgesetzt wird. Hierfür kann die Steuereinheit insbesondere einen Tragarm aufweisen, an dem die Ansteuervorrichtung, wie die Steuerrolle, angeordnet ist. Dieser Tragarm kann sich aus dem Grundkörper der Steuereinheit erstrecken.

Die Ansteuervorrichtung weist zudem vorzugsweise eine mittlere Längsachse auf (bei der Steuerrolle beispielsweise eine Drehachse), die parallel zur Drehachse der Steuereinheit ausgerichtet ist, um die Kompaktheit der Vorrichtung weiter zu verbessern.

Nach einer Weiterbildung der Erfindung weist die Vorrichtung sich aus dem Grundkörper erstreckende Tragarme auf, wobei an jedem Tragarm ein Steuerbolzen angeordnet ist. Die Tragarme für die Steuerbolzen (im Weiteren auch Steuerbolzentragarme genannt) können sich mit einem ersten Ende stangenförmig aus dem Grundkörper erstrecken, während an dem dem ersten Ende gegenüberliegenden zweiten Ende ein weiterer Steuerbolzen angeordnet ist. Hierfür können die Steuerbolzentragarme im Bereich beider Enden jeweils eine Steuerbolzenaufnahme umfassen. Die Steuerbolzentragarme erstrecken sich bspw. aus weitestgehend gegenüberliegenden Abschnitten aus dem Grundkörper heraus. Alternativ können die Tragarme auch in einem Winkel von 25° bis 45° zueinander angeordnet sein.

Der Grundkörper und/oder die Tragarme können parallel zur Tragkörperebene angeordnet sein. Dabei ist die Tragkörperebene in der Einbaulage vorzugsweise horizontal ausgerichtet. Eine besonders kompakte Bauform, insbesondere eine in Vertikalrichtung besonders schmale Bauform kann durch winkelig angeordnete Tragarme ausgebildet werden. Dabei weist der Tragkörper eine Aussparung oder einen Durchbruch auf, in der die Steuerbolzenaufnahmen angeordnet sind, d.h. bei der die Steuerbolzenaufnahmen zwischen einer Oberseite und einer Unterseite des Tragkörpers vorliegen. Dabei kann der Grundkörper über die winkelig ausgebildeten Tragarme zumindest abschnittsweise über die Unterseite herausragend angeordnet werden, wodurch dieser ausreichend Bewegungsraum für seine Drehbewegung erhält.

Der Tragarm für die Ansteuervorrichtung kann an einem der Steuerbolzentragarme oder an einer der Steuerbolzenaufnahme angeordnet bzw. als Verlängerung eines der Steuerbolzentragarme ausgebildet sein. Analog zur Steuerbolzenaufnahme kann er eine Aufnahme für die Ansteuervorrichtung aufweisen.

Nach einer Weiterbildung der Erfindung sind die Steuernuten zumindest abschnittsweise bogenförmig ausgebildet, wodurch eine verbesserte Selbsthemmung der Greifarme erreicht wird.

Dabei sind die Steuernuten derart ausgebildet, dass die Bewegung der Greifarme zwischen der jeweiligen Öffnungsstellung und Greifstellung nicht synchron erfolgt, sondern ungleichmäßig und nicht linear zur Winkelstellung der Steuereinheit. Unter bogenförmig wird verstanden, dass die mittlere Längsachse der Steuernuten nicht linear verläuft.

Die Bewegung der Steuerbolzen erfolgt jedoch auch bei bogenförmigen Steuernuten weiterhin in weitestgehend entgegengesetzter Richtung, wonach mit der Drehbewegung der Steuereinheit ein Steuerbolzen (bspw. radial) nach innen (Richtung zweitem freien Ende der Greifarme) und der andere Steuerbolzen (bspw. radial) nach außen (in Richtung zum Greifabschnitt) bewegt wird. Beide Steuerbolzen weisen vorzugsweise die gleiche Drehrichtung um die Drehachse der Steuereinheit auf.

Eine weitere Vereinfachung des strukturellen Aufbaus wird nach einer Weiterbildung der Erfindung dadurch erreicht, dass die Steuerbolzen, die Schwenkachsen und die Drehachse parallel angeordnet sind. Unter parallel ist zu verstehen, dass die jeweiligen Mittellängsachsen parallel ausgerichtet sind. Dabei weisen die genannten Bauteile vorzugsweise einen runden Querschnitt auf und können stangenförmig ausgebildet sein.

Aufgrund dessen, dass die Drehachse insbesondere senkrecht auf der Ebene des Tragkörpers (in der Einbaulage vertikal) steht, sind bei der parallelen Anordnung zur Drehachse auch die Steuerbolzen und die Schwenkachsen insbesondere senkrecht zur Ebene des Tragkörpers angeordnet. D. h., die Mittellängsachsen der genannten Bauteile stehen senkrecht auf der Ebene des Tragkörpers. Im eingebauten Zustand sind die Mittellängsachsen somit vorzugsweise vertikal ausgerichtet.

Um die Bauhöhe der Vorrichtung weiter zu verringern, ist nach einer Weiterbildung der Erfindung vorgesehen, dass die Steuernuten nebeneinander angeordnet sind. D.h., die Steuernuten sind in Richtung der Ebene des Tragkörpers, d.h., in der Einbaulage vorzugsweise in Horizontalrichtung, nebeneinander und vorteilhafterweise auch auf der gleichen Ebene angeordnet. Neben den Steuernuten können auch die vollständigen Greifarme in einer Ebene und somit nebeneinander angeordnet sein, sodass in Richtung senkrecht auf die Ebene des Tragkörpers (in der Einbaulage vorzugsweise in Vertikalrichtung) die Steuernuten und vorzugsweise auch die gesamten Greifarme auf der gleichen Höhe angeordnet sind. Dabei können die Greifarme parallel zur Ebene des Tragkörpers ausgerichtet sein.

Um die Bauhöhe der Vorrichtung weiter zu verringern, weist der Tragkörper besonders bevorzugt eine Oberseite und eine Unterseite und mindestens für jede Behälterklammer eine Aussparung oder Öffnung auf, wobei die Steuereinheit und/oder die Ansteuervorrichtung mindestens teilweise in der jeweiligen Öffnung und zwischen der Oberseite und der Unterseite angeordnet sind. Hierdurch wird eine in Vertikalrichtung besonders kompakte Bauweise der Vorrichtung ermöglicht. Besonders bevorzugt wird die Drehachse der Steuereinheit zwischen den Steuerbolzen angeordnet, wodurch der Bauraum der Vorrichtung weiter verkleinert wird. Dabei ist die Drehachse der Steuereinheit in Richtung der Ebene des Tragkörpers, zwischen den Steuerbolzen angeordnet. So können bspw. die Drehachse der Steuereinheit auf der Mittellängsachse der Behälterklammer und die Steuerbolzen rechts und links von der Mittellängsachse der Behälterklammer platziert sein.

Die Anordnung der Drehachse an der Steuereinheit kann bspw. direkt am Grundkörper erfolgen, so dass direkt am Grundkörper eine Drehachsenaufnahme angeordnet ist. Bspw. bei einer runden oder ovalen Ausbildung erfolgt die Anordnung der Drehachse vorzugsweise zumindest weitestgehend mittig (zentral) am Grundkörper. Nach einer Weiterbildung der Erfindung ist jedoch ein sich aus dem Grundkörper erstreckender Drehachsenarm mit einer Drehachsenaufnahme zur Aufnahme der Drehachse angeordnet. Die Drehachse kann somit außermittig am Grundkörper angeordnet sein. Der Drehachsenarm erstreckt sich ähnlich den Tragarmen für die Steuerbolzenaufnahmen aus dem Grundkörper. Er ist vorzugsweise in Horizontalrichtung zwischen den Tragarmen angeordnet und kann bspw. ebenfalls winkelig ausgebildet sein. Auch der Drehachsenarm mit der Drehachsenaufnahme kann zumindest weitestgehend in der Aussparung oder Öffnung des Tragkörpers und somit in Vertikalrichtung zwischen der Oberseite und Unterseite des Tragkörpers angeordnet sein.

Sowohl der Drehachsenarm als auch die Tragarme bilden letztlich Hebelarme, die mit einem Ende am Grundkörper ansetzen und am gegenüberliegenden Ende die Drehachsenaufnahme bzw. die Steuerbolzenaufnahmen umfassen. Der Winkel zwischen dem Drehachsenarm und den Tragarmen beträgt dabei vorzugsweise zwischen 17,5° und 25°.

Um bei auftretenden Seitenkräften eine Veränderung des Abstandes der Steuerbolzen und damit ein Blockieren der Bewegung der Steuerbolzen in den Steuernuten zu verhindern, ist nach einer Weiterbildung der Erfindung eine Brücke vorgesehen, die die beiden Steuerbolzen verbindet. Die Brücke bildet gemeinsam mit den beiden Tragarmen der Steuerbolzen und dem Grundkörper einen Rahmen aus, der den Abstand der Steuerbolzen konstant hält.

Die Brücke ist vorzugsweise auf der den Greifarmen gegenüberliegenden Seite des Tragkörpers an den Steuerbolzen angeordnet. So kann sie bspw. in Richtung der Oberseite des Tragkörpers vorliegen, während die Greifarme in Richtung der Unterseite angeordnet sind. Die Brücke ragt vorzugsweise über die Oberseite des Tragkörpers hinaus. Um die Bewegungsführung der Steuerbolzen weiter zu verbessern ist zudem vorgesehen, dass die Brücke an der Drehachse drehbar gelagert ist. Hierfür ist vorzugsweise ein zumindest halbseitiges Gleitlager ausgebildet, das an der Drehachse anliegt. Das Gleitlager ist weist dabei vorzugsweise eine Rillung auf, so dass besonders schmale Berührungsflächen zwischen der Brücke und der Drehachse vorliegen. Durch die Drehbewegung der Brücke liegen die schmalen Berührungsflächen abwechselnd frei, so dass aufgrund dessen eine besonders einfache Reinigung, bspw. Spülung, durchgeführt werden kann.

Zur Befestigung der Steuereinheit mit der Brücke können an dem Tragkörper, hier an einem Drehachsenlager zwei Sperrelemente angeformt sein. Dabei sind die Sperrelemente das gerillte Gleitlager derart aufeinander abgestimmt, dass in einer Entnahmeposition der Steuereinheit und bei vorheriger Demontage der Greifarme die Brücke 30 an den Sperrelementen vertikal in Richtung der Unterseite des Tragkörpers vorbei bewegt werden kann. Das heißt, dass die Steuereinheit mit der Brücke somit vertikal in Richtung der Unterseite besonders einfach vom Tragkörper demontiert und montiert werden kann. Zudem sind für die Befestigung der Steuereinheit mit der Brücke keine separaten Befestigungsmittel notwendig.

Bei im Betrieb auftretenden Seitenkräften kann es zu Verschiebungen zwischen den Steuerbolzenaufnahmen bzw. des oben beschriebenen Rahmens und dem Drehachsenarm mit der Drehachsenaufnahme kommen. Um die seitlichen Kräfte abzufedern, ist nach einer Weiterbildung der Erfindung vorgesehen, dass zwischen dem Drehachsenarm und den Tragarmen jeweils ein elastisches Lager angeordnet ist, die insbesondere eine Vorspannung zwischen dem Drehachsenarm und den Tragarmen erzeugen. Dabei können die elastischen Lager bspw. im Bereich der Drehachsenaufnahme und der Steuerbolzenaufnahme angeordnet sein. Als elastische Lager können elastische Rundschnurringabschnitte verwendet werden. Als Vorspannung wird vorzugsweise eine Druckspannung angelegt, d.h. die elastischen Lager drücken die Tragarme von dem Drehachsenarm weg Die Vorspannung gewährleistet insbesondere, dass der Rahmen (d.h. die Steuerbolzen) nach Wegfall der seitlichen Kräfte wieder in seine Ausgangsposition zurückbewegt wird.

Alternativ zur oben erwähnten Ausführung der Ansteuervorrichtung mit einem sich aus dem Grundkörper erstreckenden Tragarm, an dem die Steuerrolle befestigt ist, ist nach einer Weiterbildung der Erfindung vorgesehen, dass die Ansteuervorrichtung direkt an einem Steuerbolzen angreift. Diese Ausführungsform ist insbesondere vorteilhaft bei einer Anordnung der Drehachse an dem Grundkörper mittels eines Dreharms. Hierfür kann einer der Steuerbolzen verlängert und bspw. als Aufnahme für die Steuerrolle der Ansteuervorrichtung vorgesehen sein. Der Steuerbolzen ragt dann bspw. über die Unterseite des Tragkörpers hinaus. Sofern am Steuerbolzen ebenfalls eine in der Steuernut angreifende Steuerrolle angeordnet ist, können bspw. zwei separat drehbare Steuerrollen in Längsachsenrichtung des Steuerbolzens hintereinander angeordnet sein.

Nach einer Weiterbildung der Erfindung ist zudem vorgesehen, dass die Greifarme in der Öffnungsposition einen Öffnungswinkel zwischen 4° bis 15°, insbesondere 5° bis 10° und in der Greifstellung einen Öffnungswinkel von 0° bis 5°, insbesondere 1° bis 3° aufweisen.

Der Öffnungswinkel bezieht sich auf die Mittellängsachsen der Greifarme. Der geringe Öffnungswinkel ermöglicht eine geringe Arbeitsbreite der Behälterklammer, wodurch der Abstand der Behälterklammern, bspw. auf einem Transportstern, verkleinert, bzw. die Behälterklammeranzahl auf dem Transportstern vergrößert werden kann. Auch ist die Zeit zum Öffnen und Schließen der Behälterklammer besonders kurz.

Aufgrund der besonderen Anordnung der Steuereinheit, Steuerbolzen und Steuerkurven ist nur eine geringe Drehbewegung der Steuereinheit zum Öffnen und Schließen der Greifarme notwendig. Insofern ist nach einer Weiterbildung der Erfindung vorgesehen, dass zwischen der Öffnungsstellung und der Greifstellung der Behälterklammer die Steuereinheit einen Drehwinkel zwischen. -45° bis +45°, bevorzugt -30° bis +30° oder kleiner durchläuft, wobei diese beiden Winkel nicht identisch sein müssen.

Durch den kleinen Drehwinkel können die Steuerkurven besonders kurz sein, vorzugsweise mit einer Länge zum Öffnen von 50 bis 120mm und zum Schließen von 30 bis 90mm. Hierdurch wird der notwendige Bauraum besonders klein, hohe Schaltgeschwindigkeiten für hohe Flaschenleistungen werden möglich, die Herstellungskosten werden verringert und die Reinigbarkeit der Vorrichtung wird erhöht. Auch besteht die Möglichkeit, aufgrund der besonders kurz ausführbaren Steuerkurve Pusher zum Auswerfen der Behälter aus der Vorrichtung anzuordnen.

Zur Vereinfachung der Bewegung der Greifarme, insbesondere der Schließbewegung und zur erhöhten Sicherung der Greifarme in der Greifstellung, ist nach einer Weiterbildung der Erfindung ein Federelement vorgesehen, das die Behälterklammer auf die Greifstellung hin vorspannt, wobei das Federelement derart angeordnet ist, dass das Drehen der Steuereinheit zum Öffnen der Behälterklammer gegen die Kraft des Federelements erfolgt.

Das Federelement ist insbesondere als Zugfeder ausgebildet und bewirkt das automatische Schließen der Greifarme, sobald keine aktive Steuerung durch die Ansteuervorrichtung erfolgt. Hierfür ist das Federelement bspw. mit einem ersten Ende am Tragkörper und mit einem dem ersten Ende gegenüberliegenden zweiten Ende direkt an der Steuereinheit oder beispielsweise an der Ansteuervorrichtung angeordnet.

Die Befestigung der Federelemente am Tragkörper bzw. an der Steuereinheit oder der Ansteuervorrichtung kann über Befestigungselemente (bspw. Befestigungsbolzen) erfolgen, deren mittlere Längsachse vorzugsweise parallel zur Drehachse angeordnet ist. Dabei erfolgt die Befestigung des Federelements an der der Befestigung am Tragkörper gegenüberliegenden Seite besonders bevorzugt mittels eines Federtragarms, an dem das Federelement angeordnet wird. Der Federtragarm kann mit einem ersten Ende an der Steuereinheit, bspw. dem Grundkörper, insbesondere jedoch an einem der Steuerbolzentragarme, einer der Steuerbolzenaufnahmen oder dem Tragarm bzw. der Aufnahme für die Ansteuervorrichtung angeordnet sein. Das dem ersten Ende gegenüberliegende freie zweite Ende des Federtragarms weist zudem in vorteilhafterweis eine Aufnahme auf, die bspw. zur Lagerung des Befestigungselements (bspw. des Befestigungsbolzens) für die Befestigung des Federelements vorgesehen ist. Der Federtragarm kann, wie der Tragarm für die Ansteuervorrichtung und/oder der Steuerbolzentragarm, stangenförmig ausgebildet und vorteilhafterweise auch parallel zur Ebene des Tragkörpers ausgerichtet sein. Eine mittlere Längsachse des Befestigungselements ist vorzugsweise ebenfalls parallel zur Drehachse der Steuereinheit ausgerichtet.

Insbesondere bei einem Federelement und/oder einer Steuerrolle kann es vorkommen, dass aufgrund der ständigen Bewegung dieser Bauteile Verschmutzungen in Form von bspw. Abnutzungspartikeln oder Resten von Reinigungsmitteln oder Spülwasser auftreten. Um eine Erhöhung der Sicherheit der Behälter vor Verschmutzungen zu erreichen, ist nach einer Weiterbildung der Erfindung vorgesehen, dass das Federelement und eine Steuerrolle in Längsachsenrichtung der Drehachse unterhalb der Greifarme angeordnet sind. Dabei bezieht sich unterhalb auf die Einbaulage der Vorrichtung, wodurch unterhalb in Vertikalrichtung unterhalb bedeutet.

Damit ist gewährleistet, dass eine Flaschenöffnung oberhalb des Federelements und der Steuerrolle angeordnet ist und auftretende Verschmutzungen nicht in die Flaschenöffnung gelangen können. Zudem ist durch die Anordnung unterhalb der Greifarme auf die als Verschleißteile anzusehenden Federelemente und Steuerrollen ein besonders einfacher und schneller Zugriff für einen Austausch möglich.

Während bei einer Anordnung der Drehachse direkt an der Steuereinheit die Drehachse in Vertikalrichtung (d.h. bspw. in ihre eigene Längsachsenrichtung) unterhalb (in der Einbaulage insbesondere in Vertikalrichtung) der Greifarme angeordnet ist, wird die Drehachse bei der Anordnung der Drehachse an dem Grundkörper über einen Drehachsenarm vorzugsweise in Vertikalrichtung oberhalb der Greifarme angeordnet. Während die Anordnung unterhalb der Greifarme eine besonders hohe Sicherheit der Behälter vor Verschmutzungen ermöglicht, ist durch die Anordnung oberhalb der Greifarme eine besonders kompakte Ausbildung der Vorrichtung möglich.

Zur weiteren Verbesserung der Reinigbarkeit und zur Sicherung der Greifarme in der Greifstellung ist nach einer Weiterbildung der Erfindung eine magnetische Spannvorrichtung vorgesehen, die die Behälterklammer auf die Greifstellung hin vorspannt, wobei die magnetische Spannvorrichtung derart angeordnet ist, dass das Verschwenken der Steuereinheit zum Öffnen der Behälterklammer gegen die Kraft der magnetischen Spannvorrichtung erfolgt.

Unter der magnetischen Spannvorrichtung ist mindestens ein Magnetkörper zu verstehen, dessen magnetische Kraft einer Bewegung der Greifarme aus der Greifstellung in Richtung der Öffnungsstellung entgegenwirkt. Dabei kann der Magnetkörper bspw. auf ferromagnetische Greifarme oder eine ferromagnetische Steuereinheit wirken. Ein Magnetkörper kann auch so positioniert sein, dass er aufgrund seiner magnetischen Anziehungskräfte die Greifarme in die Greifstellung zieht.

Vorzugsweise sind jedoch mindestens zwei Magnetkörper angeordnet, aufgrund deren gegenseitiger Anziehung oder Abstoßung die Vorspannung der Behälterklammer erzeugt wird. Bei der Anordnung von zwei Magnetkörpern kann mindestens ein Magnetkörper gegenüber dem anderen Magnetkörper beweglich gelagert sein, so dass bei einer Bewegung des mindestens einen Magnetkörpers die Magnetkörper aneinander vorbei bewegt werden. Dabei beeinflussen sich die beiden Magnetfelder der Magnetkörper, zumindest während eines Abschnitts der Bewegung des einen Magnetkörpers.

Die Bewegung kann mittels einer Verschwenkbewegung eines oder beider Magnetkörper in einer horizontalen Ebene erfolgen, wobei die Verschwenkbewegung insbesondere parallel zu einer Bewegungsebene der Greifarme erfolgt.

Besonders bevorzugt weist die magnetische Spannvorrichtung einen an der Steuereinheit angeordneten ersten Magnetkörper und einen an dem Tragkörper angeordneten zweiten Magnetkörper auf. Die beiden Magnetkörper sind bezüglich ihrer Polarität und Nähe vorzugsweise so angeordnet, dass sie sich gegenseitig abstoßen.

Der erste Magnetkörper ist insbesondere mit der Steuereinheit derart verbunden, dass sich bei einer Drehbewegung der Steuereinheit um die Drehachse der erste Magnetkörper mit bewegt, insbesondere in einer (in der Einbaulage) horizontalen Ebene verschwenkt und an dem zweiten Magnetkörper vorbeigeführt wird. Beispielsweise überstreicht der erste Magnetkörper den zweiten Magnetkörper bei der Verschwenkbewegung, vorzugsweise jedoch ohne in direkten Kontakt mit dem zweiten Magnetkörper zu kommen. Der erste Magnetkörper wird vorzugsweise mit einem geringen Abstand zur Oberfläche der Oberseite des Tragkörpers positioniert. Mit der Drehung der Steuereinheit bewegt sich der erste Magnetkörper somit auf einem Kreisabschnitt um die Drehachse.

Der zweite Magnetkörper ist bspw. unbeweglich am oder im Tragkörper angeordnet und kann die Oberfläche der Oberseite des Tragkörpers mit ausbilden oder unter der Oberfläche des Tragkörpers vorliegen. Er ist entlang des Kreisabschnittes positioniert.

Die Magnetfelder der Magnetkörper wirken bei der Drehbewegung auf die Steuereinheit in der Form, dass sich beim Annähern der Magnetkörper die Magnetfelder beider Magnetkörper abstoßen, so dass die Bewegung des ersten Magnetkörpers auf den zweiten Magnetkörper zu erschwert wird. Sobald der erste Magnetkörper an dem zweiten Magnetkörper vorbeigeführt ist, wird der erste Magnetkörper von dem zweiten Magnetkörper weggedrückt (abgestoßen). Die Vorspannung der Behälterklammer wird somit vorzugsweise dadurch erzeugt, dass aufgrund der gegenseitigen Abstoßung der beiden Magnetkörper die Steuereinheit und die mit der Steuereinheit über die Steuerbolzen verbundenen Greifarme der Behälterklammer in Richtung der Greifstellung der Behälterklammer gedrückt werden. Neben der Vorspannung der Behälterklammer in Greifstellung kann hierdurch auch eine Vorspannung der Behälterklammer in Öffnungsstellung erreicht werden. D.h., dass das Verschwenken der Steuereinheit sowohl zum Öffnen der Behälterklammer als auch zum Schließen der Behälterklammer vorzugsweise gegen die Kraft der magnetischen Spannvorrichtung erfolgt.

Abhängig von der Positionierung des ersten und zweiten Magnetkörpers kann gesteuert werden, ob die wirkende Kraft in Richtung der Greifstellung oder in Richtung der Öffnungsstellung größer oder in beide Richtungen gleich stark ist. Diese Steuerung kann durch die Positionierung des Umschaltpunktes, d.h. dem Punkt, an dem die beiden Magnetkörper exakt aneinander gegenüberliegend angeordnet sind, erfolgen. Sofern der Bewegungsweg vom Umschaltpunkt zur Greifstellung kürzer ist als zur Öffnungsstellung, ist die Vorspannung in der Greifstellung größer als in der Öffnungsstellung und umgekehrt. Der zweite Magnetkörper ist an dem Tragkörper, bspw. im Bereich der Mittellängsachse der Behälterklammer, angeordnet.

Der erste Magnetkörper kann bspw. über einen Tragarm am Grundkörper gelagert sein. Nach einer Weiterbildung der Erfindung ist jedoch vorgesehen, dass der erste Magnetkörper direkt am Grundkörper der Steuereinheit angeordnet ist. Während die Ausbildung eines Tragarms bspw. bei der direkten Lagerung der Drehachse im Grundkörper vorteilhaft ist, wird die Lagerung des ersten Magnetkörpers direkt im Grundkörper insbesondere bevorzugt ausgeführt, wenn die Drehachse über einen Drehachsenarm mit dem Grundkörper verbunden ist.

Nach einer Weiterbildung der Erfindung sind der Magnetkörper der Spannvorrichtung, die Ansteuervorrichtung und die Steuerbolzen über an der Drehachse angreifende Hebelarme miteinander gekoppelt. D.h. die Kraftverteilung zwischen der Ansteuervorrichtung, den beiden Steuerbolzen und der Spannvorrichtung erfolgt über die gemeinsame Drehachse, mit der alle vier Bauteile über ihren jeweiligen Hebelarm gekoppelt sind. Der Grundkörper der Steuereinheit kann in diesem Zusammenhang die Funktion einer Kopplung einnehmen, da an ihm alle Bauteile, bspw. mittels der Tragarme, ansetzen und sie gemeinsam um die Drehachse gedreht werden.

Insbesondere bei einer Anordnung der Drehachse direkt im Grundkörper kann ein erster Hebelarm somit einen Tragarm umfassen, der mit einem ersten Ende mit dem Grundkörper der Steuereinheit und mit einem dem ersten Ende gegenüberliegenden zweiten Ende mit der Magnetkörperaufnahme, die den ersten Magneten umfasst, verbunden ist. Der Tragarm kann sich von dem Grundkörper der Steuereinheit weg, bspw. in oder entgegen der Richtung zu den Greifabschnitten der Behälterklammer erstrecken. Der Tragarm mit der Magnethalterung und dem Magnetkörper kann unbeweglich an dem Grundkörper der Steuereinheit angeordnet werden. Der Tragarm, der Magnethalter und der Grundkörper der Steuereinheit sind zudem vorzugsweise einstückig ausgebildet. Der Tragarm und der Magnethalter können somit Bestandteil der Steuereinheit sein.

Sofern die Drehachse mittels des Drehachsenarms am Grundkörper gelagert ist, wird der erste Magnetkörper vorzugsweise direkt im Grundkörper gelagert. Bei einer solchen Ausführungsform ist der erste Magnetkörper letztlich über den Drehachsenarm, der mit der Drehachse (Drehachsenaufnahme) und dem Grundkörper verbunden ist, mit der Drehachse gekoppelt. Das heißt, der Hebelarm des ersten Magnetkörpers wirkt in diesem Fall zwischen Drehachse und Grundkörper.

Zwei weitere Hebelarme (zweiter und dritter Hebelarm) können zwischen der Steuerbolzenaufnahme und der Drehachse, ein vierter Hebelarm zwischen der Aufnahme der Ansteuervorrichtung und der Drehachse vorgesehen sein. Dabei kann, abhängig von der konstruktiven Ausgestaltung, der Hebelarm zwischen der Aufnahme der Ansteuervorrichtung und der Drehachse zumindest abschnittsweise deckungsgleich zu einem der Hebelarme zwischen einer der Steuerbolzenaufnahmen und der Drehachse liegen. Die Hebelarme können selbstverständlich gerade oder auch winkelig ausgeführt sein.

Insbesondere bei einer Ausführung der Vorrichtung mit der direkt am Grundkörper gelagerten Drehachse, sind die beiden Hebelarme der Steuerbolzenaufnahme vorzugsweise an gegenüberliegenden Seiten der Drehachse eingeordnet und weisen insbesondere einen Winkel zwischen 160° und 200°, insbesondere 180° zueinander auf. Dementsprechend kann auch der Winkel zwischen dem Hebelarm der Aufnahme der Ansteuervorrichtung und dem zweiten Hebelarm oder dem dritten Hebelarm zwischen 160° und 200°, insbesondere 180° betragen. Der Hebelarm der Spannvorrichtung bzw. der Drehachse (erster Hebelarm) kann in der gleichen Ebene wie die Hebelarme der Steuerbolzenaufnahme (zweiter und dritter Hebelarm) und/oder der Ansteuervorrichtungsaufnahme (vierter Hebelarm) angeordnet sein. Eine Ausführungsform der Vorrichtung sieht vor, dass der erste Hebelarm zwischen den beiden Hebelarmen der Steuerbolzenaufnahmen angeordnet ist. Er kann in einem Winkel von 90° +/- 20° zu den beiden Hebelarmen der Steuerbolzenaufnahmen stehen.

Bei der Ausführung der Vorrichtung mit einer an einem Drehachsenarm gelagerten Drehachse beträgt der Winkel α zwischen den Tragarmen bevorzugt zwischen 25° und 45°, während der Drehachsenarm zwischen den Tragarmen vorzugsweise symmetrisch angeordnet ist, d.h. der Winkel zwischen Drehachsenarm und Tragarm beträgt bspw. a/2. Der Hebelarm der Ansteuervorrichtung ist bei dieser Ausführungsform vorzugsweise deckungsgleich mit einem der Hebelarme der Steuerbolzen. Aufgrund dessen, dass die Tragarme und der Drehachsenarm am Grundkörper angreifen, die Drehachse jedoch über den Drehachsenarm am Grundkörper gelagert ist, sind die wirkenden Hebelarme zwischen Ansteuervorrichtung und Drehachse und Steuerbolzen und Drehachse insbesondere winklig ausgeführt.

Aufgrund des dargestellten Hebelarmsystems bewegt sich der erste Magnetkörper bei einer Bewegung der Greifarme von der Greifstellung in die Öffnungsstellung mit. Bei dieser Bewegung werden der erste Magnetkörper und mit ihm die Greifarme aufgrund des entgegengesetzt gepolten zweiten Magnetkörpers bis zum Erreichen des Umschaltpunktes (auch Totpunkt genannt) in Richtung der Öffnungsstellung gedrückt. Sobald der Umschaltpunkt überschritten ist, werden der erste Magnetkörper und mit ihm die Greifarme durch die abstoßende Wirkung des zweiten Magnetkörpers in Richtung der Greifstellung gedrückt, d.h., die Behälterklammer wird in Richtung der Greifstellung vorgespannt. Bei der rückwärtigen Bewegung, d.h. von der Greifstellung in die Öffnungsstellung, wirken letztlich die gleichen magnetischen Kräfte, so dass auch eine Vorspannung der Behälterklammer in Richtung der Öffnungsstellung erzeugt wird.

Bei einer in beide Stellungen der Greifarme wirkenden magnetischen Spannvorrichtung erfolgt vorzugsweise eine aktive Steuerung der Greifarme sowohl in Richtung der Greifstellung als auch in Richtung der Öffnungsstellung. Dies kann bspw. durch Steuerkurven erfolgen, die an der Ansteuervorrichtung angreifen und die Ansteuervorrichtung mit den Greifarmen und dem ersten Magnetkörper bewegen. Bei einem Transportstern können die Steuerkurven bspw. in Radialrichtung außen und innen an der Ansteuervorrichtung angreifen, um beide Bewegungsrichtungen der Greifarme abzudecken.

Anstelle der Tragarme und des bspw. ringförmigen Grundkörpers und/oder der bspw. ringförmigen Aufnahmen können die Steuerbolzenaufnahmen, die Aufnahme der Ansteuervorrichtung und/oder die Magnetkörperaufnahme auch direkt in oder an einem entsprechend großen, sich um die Drehachse drehenden Grundkörper der Steuereinheit angeordnet sein. Die Aufnahmen können als Öffnungen und/oder Ausnehmungen im Grundkörper vorliegen, die zur Lagerung der Steuerbolzen, der Ansteuervorrichtung und/oder der Magnetkörperaufnahme ausgebildet sind. Die oben genannten bevorzugten Winkel zwischen den sich auch hier ergebenden Hebelarmen können beibehalten werden. Ein derartiger Grundkörper kann in seiner äußeren Form bspw. zumindest abschnittsweise rund oder auch dreieckig ausgebildet sein, wodurch eine besonders einfache Reinigung ermöglicht wird.

Anzumerken ist, dass die magnetische Spannvorrichtung insbesondere alternativ zum Federelement angeordnet werden kann. Sollte beispielsweise eine besonders große Vorspannung in der Greifstellung notwendig sein, kann die magnetische Spannvorrichtung auch zusätzlich zum Federelement angeordnet sein.

Zusätzlich zu den abstoßend wirkenden Kräften des Magnetpaars kann durch weitere Magnete, die anziehend wirken, die Haltekraft in der geschlossenen Stellung erhöht werden. Diese zusätzlichen Magnete sind idealerweise im Bereich einer der beiden Endstellungen oder an beiden Endstellungen der Spannvorrichtung an der Trageinheit vorgesehen. Dabei ist vorrangig insbesondere in der tragenden, geschlossenen Position eine weitere, magnetische Haltekraft vorteilhaft.

Die Kombination mit zumindest einem weiteren Magneten, der die Spannvorrichtung in Drehrichtung "geschlossene Stellung" zieht, hat auch den großen Vorteil, dass der überspannte Winkel zwischen "geschlossene Stellung" und Totpunkt größer gewählt werden kann was die Formgebung der Nut und auch die Selbsthemmung positiv beeinflusst und dabei den Greifbereich vergrößert.

So muss der überspannte Winkel zwischen "geschlossene Stellung" und Totpunkt und Totpunkt bis offene Stellung nicht gleich sein, da die Kombination aus abstoßendem Magnetpaar im Bereich des Totpunkts und anziehend wirkendem Magnetpaar im Winkelbereich des Schließens einen größeren Abstand (Winkel) erlaubt, weil die Kräfte auf zwei Magnetpaare aufgeteilt werden.

Natürlich könnte auch noch ein weiterer anziehend wirkender Magnet auch noch die offene Stellung unterstützen.

Sofern eine Transportvorrichtung mehrere Behälterklammern aufweist, ist selbstverständlich für jede Behälterklammer eine magnetische Spannvorrichtung vorgesehen.

Wie bereits oben ausgeführt, kann die Vorrichtung als Transportstern ausgebildet sein. Der Tragkörper ist dabei bspw. ein zusätzliches Bauteil, welches am Transportstern befestigt wird. Besonders bevorzugt ist der Tragkörper jedoch eine Sternplatte oder ein Sternplattensegment. Die Sternplatte oder das Sternplattensegment sind Kernbauteile des Transportsterns, an dem die Drehachse und die Schwenkachsen der Behälterklammer direkt angeordnet werden. Durch die Ausbildung des Tragkörpers als Kernbauteil des Transportsterns kann insbesondere die Kompaktheit der Verrichtung weiter verbessert werden, da der Tragkörper kein zusätzliches Bauteil der Vorrichtung darstellt.

Eine Sternplatte ist insbesondere plattenförmig, d. h. flach und eben ausgebildet und weist eine zumindest im Wesentlichen runde Form auf. Unter einem Sternplattensegment ist dabei ein Bauteil der Sternplatte zu verstehen, das bspw. eine einzelne Behälterklammer trägt. Ein Sternplattensegment ist insbesondere derart ausgebildet, dass eine Vielzahl von identischen Sternplattensegmenten zu einer Sternplatte zusammengebaut werden können.

Wie bereits erwähnt, kann die Vorrichtung auch eine Vielzahl von nebeneinander angeordneten Behälterklammern umfassen. Aufgrund der besonderen Kompaktheit der erfindungsgemäßen Anordnung, insbesondere der Kompaktheit der Behälterklammern und der direkten Anordnung der Greifarme und der Steuereinheit an einer Sternplatte, kann bei Transportsternen ein ungewöhnlicher kleiner Abstand der Flaschenmittelpunkte auf dem Teilkreis von 25,71 x π hergestellt werden.

Im Weiteren wird die Erfindung anhand von Ausführungsbeispielen näher erläutert. Es zeigen:
- Fig.1: schematisch in einer perspektivischen Darstellung einen Ausschnitt aus einer Transportvorrichtung mit einer Behälterklammer in einer Öffnungsstellung;
- Fig. 2: schematisch in einer perspektivischen Darstellung die Transportvorrichtung aus Fig. 1 mit der Behälterklammer in einer Greifstellung;
- Fig. 3: schematisch in einer Seitenansicht die Transportvorrichtung aus Fig. 1 und 2 mit den Greifarmen in der Greifstellung;
- Fig. 4: schematisch in einer Ansicht von unten, einen Ausschnitt von der Transportvorrichtung aus Figur 1 bis 3 mit einer Behälterklammer in der Öffnungsstellung und einem Behältereinlauf;
- Fig.5: schematisch in einer perspektivischen Darstellung einen Ausschnitt aus einer Transportvorrichtung mit einer magnetischen Spannvorrichtung;
- Fig.6: schematisch in einer perspektivischen Darstellung einen Ausschnitt aus der Transportvorrichtung aus Figur 5;
- Fig. 7: schematisch in einer Draufsicht einen Ausschnitt der Transportvorrichtung aus Figur 5 und 6.
- Fig. 8: schematisch in einer Ansicht eine weitere Ausführungsform der Transportvorrichtung von einer Unterseite;
- Fig. 9: schematisch in einer perspektivischen Darstellung die Transportvorrichtung aus Figur 8 von der Unterseite;
- Fig. 10: schematisch in einer Ansicht die Transportvorrichtung aus Figur 8 und 9 von einer Oberseite;
- Fig. 11: schematisch in einer perspektivischen Darstellung die Transportvorrichtung aus Figur 8 bis 10 von einer Oberseite;
- Fig. 12: schematisch in einer Ansicht einen Ausschnitt von der Transportvorrichtung aus Figur 8 bis 11 von der Oberseite;
- Fig. 13: schematisch in einer perspektivischen Darstellung einen Ausschnitt von der Transportvorrichtung aus Figur 8 bis 12 von der Oberseite;
- Fig. 14: schematisch in einem Querschnitt die Transportvorrichtung aus Figur 8 bis 13.

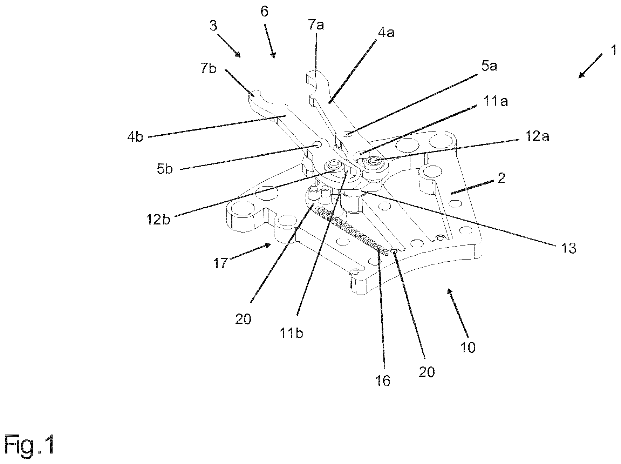

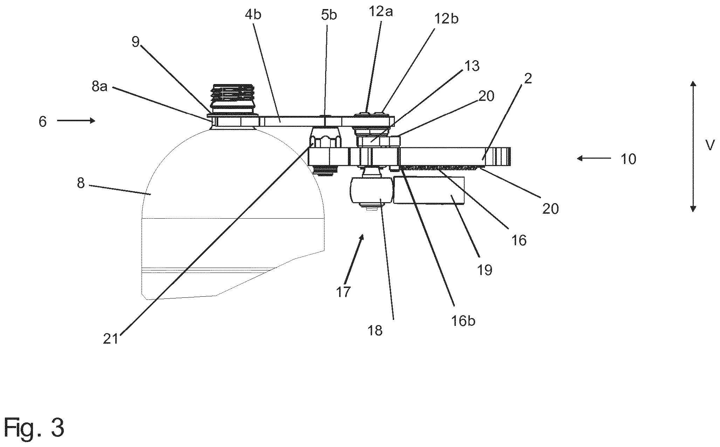

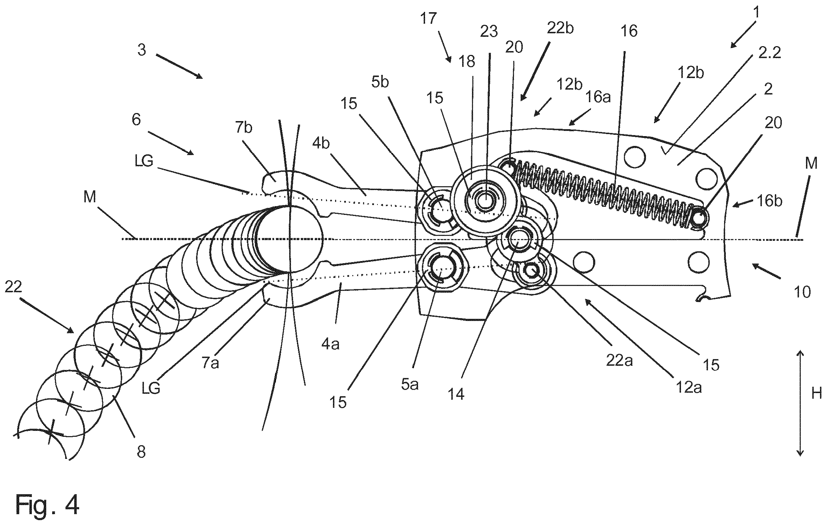

Figur 1 zeigt schematisch in einer perspektivischen Darstellung einen Ausschnitt aus einer Transportvorrichtung 1 mit einem Tragkörper 2 und einer am Tragkörper 2 angeordneten Behälterklammer 3. Die Transportvorrichtung 1 ist hierbei ein rotierender Transportstern, bei welchem die Behälterklammern 3 um eine zentrale, nicht dargestellte vertikale Maschinenachse umlaufen. Die Behälterklammer 3 umfasst zwei Greifarme 4a, 4b, die jeweils um eine vertikale Schwenkachse 5a, 5b verschwenkbar gelagert sind. Die Schwenkachsen 5a, 5b sind jeweils zwischen einem äußeren Ende 6 und einem dem äußeren Ende 6 gegenüberliegenden inneren Ende 10 der Greifarme 4a, 4b angeordnet. Die Greifarme 4a, 4b sind in ihrer Öffnungsstellung dargestellt, d.h., die Behälterklammer 3 ist geöffnet und zur Aufnahme eines Behälters 8 (siehe Figur 3 und Figur 4) bereit.

Die Greifarme 4a, 4b weisen jeweils an dem äußeren Ende 6 einen Greifabschnitt 7a, 7b auf. Die beiden Greifabschnitte 7a, 7b einer Behälterklammer 3 sind gemeinsam zum Halten des Behälters 8, hier beispielsweise einer Getränkeflasche mit einem Neckring 9 (siehe Figur 3), ausgebildet.

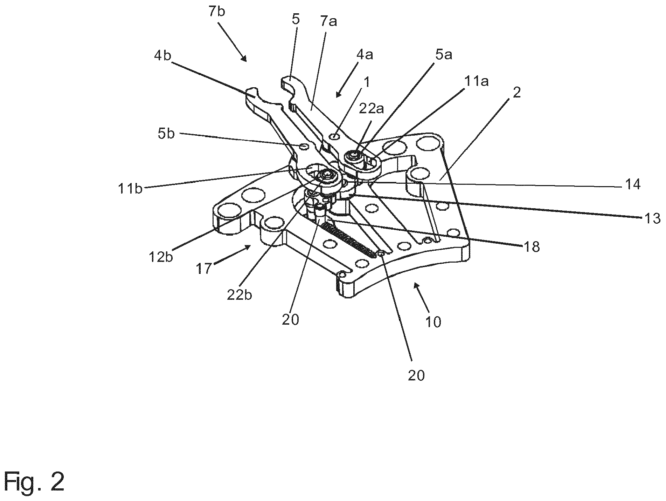

An dem inneren Ende 10 weist jeder Greifarm 4a, 4b eine Steuernut 11a, 11b auf. Die Steuernuten 11a, 11b sind leicht bogenförmig ausgebildet, d. h., die mittlere Längsachse (hier nicht dargestellt) der jeweiligen Steuernuten 11a, 11b verläuft nicht linear, sondern bogenförmig, dabei erstrecken sich die Steuernuten jedoch weitestgehend in Längsachsenrichtung LG (siehe Figur 2) der Greifarme 4a, 4b. In den Steuernuten 11a, 11b ist jeweils ein Steuerbolzen 12a, 12b beweglich gelagert. Die Steuerbolzen 12a, 12b sind Bestandteil einer Steuereinheit 13, die über eine einzelne Drehachse 14 (siehe Figur 2) drehbar am Tragkörper 2 gelagert ist.

Die Steuereinheit 13 weist einen weitestgehend runden Grundkörper 13a und zwei sich an weitestgehend gegenüberliegenden Abschnitten aus dem Grundkörper 13a erstreckende Tragarme 13b auf. Jeder Tragarm 13b umfasst eine Steuerbolzenaufnahme 13c, an der jeweils einer der Steuerbolzen 12a, 12b gelagert ist.

An der Steuereinheit 13 ist zudem eine Ansteuervorrichtung 17 mit einer zum Ansteuern durch eine Steuerkurve 19 (siehe Figur 3) ausgebildeten Steuerrolle 18 angeordnet.

Die Ansteuervorrichtung 17 umfasst einen sich aus einer der Steuerbolzenaufnahmen 13c (hier der dargestellten linken Aufnahme) erstreckenden weiteren Tragarm 17a (siehe Figur 2) mit einer Aufnahme 17b für die Steuerrolle 18. Die mittlere Längsachse (hier nicht dargestellt), um die sich die Steuerrolle 18 dreht, ist parallel zur Drehachse 14 angeordnet.

Weiter ist ein als Zugfeder ausgebildetes Federelement 16 vorgesehen, das die Greifarme 4a, 4b auf die Greifstellung (siehe Figur 2 und Figur 3) hin vorspannt. Das Federelement 16 ist mit einem ersten Ende 16a mit dem Tragkörper 2 und hier mit einem dem ersten Ende 16a gegenüberliegenden zweiten Ende 16b mit der Ansteuervorrichtung 17 verbunden. Hierfür sind an der Ansteuervorrichtung 17 und dem Tragkörper 2 als Befestigungsbolzen 20 ausgebildete Befestigungselemente zum Befestigen des Federelementes 16 angeordnet. Dabei ist der Befestigungsbolzen 20 an der Ansteuervorrichtung 17 über einen weiteren sich aus der Ansteuervorrichtung 17 erstreckenden Federtragarm 16c mit Federaufnahme 16d angeordnet. Alternativ kann das Federelement 16 auch direkt mit der Steuereinheit 13, bspw. über einen sich aus der Steuereinheit 13 erstreckenden Federtragarm 16c mit Federaufnahme 16d und Befestigungsbolzen 20, gekoppelt sein.

Die Steuernuten 11a, 11b erstrecken sich im Wesentlichen in Richtung der Längsachsen LG der Greifarme 4a, 4b (siehe Figur 2 und Figur 4) der Behälterklammer 3 und sind leicht bogenförmig ausgebildet. Die beiden Steuerbolzen 12a, 12b, die in die Steuernuten 11a, 11b der Greifarme 4a, 4b eingreifen, sind in den Steuernuten 11a, 11b versetzt angeordnet. D.h., in der Öffnungsstellung der Behälterklammer 3 liegt ein erster Steuerbolzen 12a in einem in Richtung des inneren Endes 10 des ersten Greifarms 4a ausgerichteten Abschnitt der Steuernut 11a, während der zweite Steuerbolzen 12b im zweiten Greifarm 4b in einem Abschnitt der Steuernut 12b liegt, der in Richtung des äußeren Endes 6 (Greifabschnitte 7a, 7b) zeigt. Alternativ ist auch eine umgekehrte Anordnung möglich.

Weiterhin ist in der Figur 1 der Tragkörper 2 mit dessen Oberseite 2.1 gezeigt, wobei der Behälterklammer 3 eine Öffnung 24 zugeordnet ist, in der die Steuereinheit 13 und die Ansteuervorrichtung 17 teilweise zwischen der Oberseite 2.1 und der Unterseite 2.2 aufgenommen sind. Vorteilhafterweise ist auch die Zugfeder 16 mit einem Anteil ihrer Ausdehnung in dieser Öffnung 24 angeordnet. Hierdurch ergibt sich ein sehr flacher, kompakter Aufbau.

Der Tragkörper 2 ist dabei als ein Tragring in dieser vorgenannten Gitterstruktur ausgebildet, der über nicht dargestellte Halte- und Tragelemente mit der Transportvorrichtung 1 bzw. deren Antrieb verbunden ist.

Zum Schließen der Behälterklammer 3 (Greifstellung, siehe Figur 2) wird die Steuereinheit 13 um die Drehachse 14 gedreht; in der hier dargestellten Ausführungsform mittels einer Linksdrehung. Dadurch gleitet der erste Steuerbolzen 12a in der Steuernut 11a in Richtung der Greifabschnitte 7a, 7b der Behälterklammer 3, während sich der zweite Steuerbolzen 12b in der zweiten Steuernut 11b in Richtung des inneren Endes 10 bewegt, d.h. die Steuerbolzen 12a, 12b bewegen sich in Bezug auf die Mittellängsachse M der Behälterklammer 3 bzw. der Längsachsen LG der Greifarme 4a, 4b in entgegengesetzte Richtung. Die Bewegung der Steuerbolzen 12a, 12b erfolgt gleichzeitig und in gleiche Drehrichtung um die Drehachse 14. Aufgrund der Bewegung der Steuerbolzen 12a, 12b in den Steuernuten 11a, 11b verschwenken die Greifarme 4a, 4b aufeinander zu, d. h. in Richtung auf die Mittellängsachse M der Behälterklammer 3 in die Greifstellung. Zum Öffnen der Behälterklammer 3 wird die Steuereinheit 13 zurückgedreht (Rechtsdrehung) und die Greifarme 4a, 4b werden wieder geöffnet, sodass die Steuerbolzen 12a, 12b in ihre Ausgangsposition (Figur 1) zurückkehren.

Die Schließbewegung der Greifarme 4a, 4b in die Greifstellung erfolgt hier aufgrund des einen, die Zugspannung auf die Steuereinheit 13 ausübenden Federelementes 16. Die Bogenform der Steuernuten 11a, 11b gewährleistet in der Greifstellung eine sichere selbsthemmende Funktion der Greifarme 4a, 4b, die bspw. ein unbeabsichtigtes Öffnen der Greifarme 4a, 4b aufgrund eines Auseinanderdrückens im Bereich der Greifabschnitte 7a, 7b verhindert.

Um die Greifarme 4a, 4b von ihrer Greifstellung (Figur 2) in ihre Öffnungsstellung zu bewegen (Figur 1, Figur 4), drückt eine Steuerkurve 19 (Figur 3) die Steuerrolle 18 in Richtung des äußeren Endes 6 der Greifarme 4a, 4b (radial nach außen).

Die Ausbildung der Drehachse 14, der Schwenkachsen 5a, 5b und der Steuerbolzen 12a, 12b erfolgt hier durch stangenförmige runde Bolzen, die mittels Splintringen 15 (siehe Figur 4) fixiert sind, wobei jedoch alternative Ausführungen denkbar sind.

Figur 2 zeigt den Ausschnitt der Transportvorrichtung aus Figur 1 mit den Greifarmen 4a, 4b in der Greifstellung. Die Behälterklammer 3 ist geschlossen. Die Steuerbolzen 12a, 12b haben sich in den Steuernuten 11a, 11b von ihrer Ausgangsposition, in der die Greifarme 4a, 4b in ihrer Öffnungsposition waren (Figur 1), an das jeweils gegenüberliegende Ende der Steuernuten 11a, 11b bewegt.

Figur 3 zeigt die Behälterklammer 3 ebenfalls in der Greifstellung. Die Vorrichtung 1 ist in einer Einbaulage dargestellt. Gut erkennbar ist, dass die Greifarme 4a, 4b in Vertikalrichtung V (durch einen Pfeil dargestellt) auf der gleichen Höhe angeordnet sind, wodurch eine geringe Bauhöhe erreicht wird. Zudem sind sie parallel zur Ebene des Tragkörpers 2 ausgerichtet. Die Steuerrolle 18, die Steuerkurve 19 und das Federelement 16 sind in Vertikalrichtung V unterhalb der Greifarme (4a, 4b) positioniert, wodurch Verunreinigungen der Getränkebehälter 8 sicher verhindert werden. Die dargestellte Ausführungsform ist zum Transport von Getränkebehältern 8, insbesondere Flaschen ausgebildet, die einen Neckring 9 umfassen. Dafür sind die Greifarme 4a, 4b zum Untergreifen des Neckrings 9 und zum Umfassen des Behälters 8 am Flaschenhals 8a und/oder am Flaschenhals 8a oberhalb des Neckrings ausgebildet. Weiter zeigt Figur 3 eine als Lagerhülse ausgeführte Kapselung 21 der Schwenkachse 5a, 5b.

Die drehbare Lagerung der Greifarme 4a, 4b erfolgt über die Schwenkachsen 5a, 5b, die am Tragkörper 2 drehbar gelagert sind. Wie hier dargestellt kann der Tragkörper 2 als Sternplatte eines Transportsterns (hier nicht dargestellt) ausgebildet sein. Der Tragkörper 2 kann somit plattenförmig und bspw. zumindest im Wesentlichen rund ausgebildet sein.

Figur 4 zeigt einen Ausschnitt der Transportvorrichtung 1 von der Unterseite 2.2 mit einem schematisch dargestellten Behältereinlauf 22 zwischen die Greifabschnitte 7a, 7b der Greifarme 4a, 4b. Die in Figur 4 dargestellte Ausführung der Transportvorrichtung 1 entspricht der in den Figuren 1-3 dargestellten Transportvorrichtung 1.

Figur 4 zeigt, dass die Drehachse 14 auf der Mittellängsachse M der Behälterklammer 3 angeordnet ist, während sowohl die Schwenkachsen 5a, 5b als auch die Steuerbolzen 12a, 12b rechts und links neben der Mittellängsachse M angeordnet sind. D. h., die Drehachse 14 der Steuereinheit 13 ist in Horizontalrichtung H zwischen den Steuerbolzen 12a, 12b positioniert.

Die Schwenkachsen 5a, 5b, die Drehachse 14 und die Mittellängsachse 22a, 22b der Steuerbolzen 12a, 12b zeigen alle in Vertikalrichtung V und sind parallel zueinander angeordnet. Ebenso erstrecken sich die Befestigungsbolzen 20 zum Befestigen des Federelements 16 und die Drehachse 23 der Steuerrolle 18 mit ihren Längsachsen (hier nicht dargestellt) senkrecht zur Ebene des Tragkörpers 2 und somit auch parallel zu den Schwenkachsen 5a, 5b, der Drehachse 14 und der Steuerbolzen 12a, 12b.

Der in den Figuren 1-4 dargestellte Tragkörper 2 ist - wie bereits beschrieben - ein Abschnitt einer Sternplatte eines Transportsterns. Er kann aber bspw. auch als ein von einem Transportstern separates Bauteil ausgebildet sein, das an einem Transportstern oder einem anderen Bauteil einer Behältertransportvorrichtung montierbar ist.

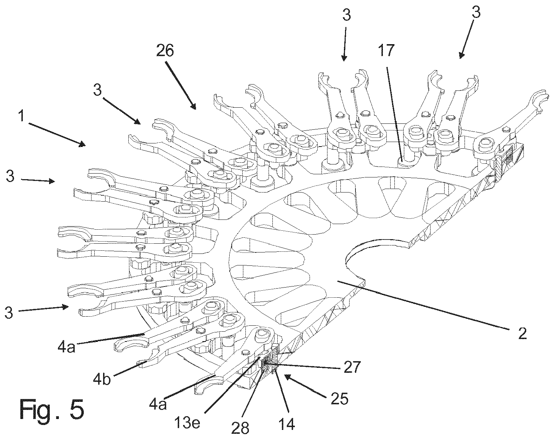

Figur 5 zeigt schematisch in einer perspektivischen Darstellung einen Ausschnitt aus einer Transportvorrichtung 1, hier einen Ausschnitt aus einem Transportstern 26, mit einer Vielzahl von Behälterklammern 3. Die Transportvorrichtung 1 unterscheidet sich von der Transportvorrichtung 1 aus Figur 1 bis 4 durch eine magnetische Spannvorrichtung 25, die anstelle des Federelementes 16 angeordnet ist. Die Spannvorrichtung 25 hält die Greifarme 4a, 4b sowohl in der Greifstellung als auch in der Öffnungsstellung unter Vorspannung, so dass eine unbeabsichtigte Bewegung der Greifarme 4a, 4b verhindert wird. Die magnetische Spannvorrichtung 25 vereinfacht den strukturellen Aufbau der Transportvorrichtung 1 deutlich, wodurch die Reinigbarkeit gegenüber einem Federelement 16 zum Erzeugen der Vorspannung vereinfacht wird.

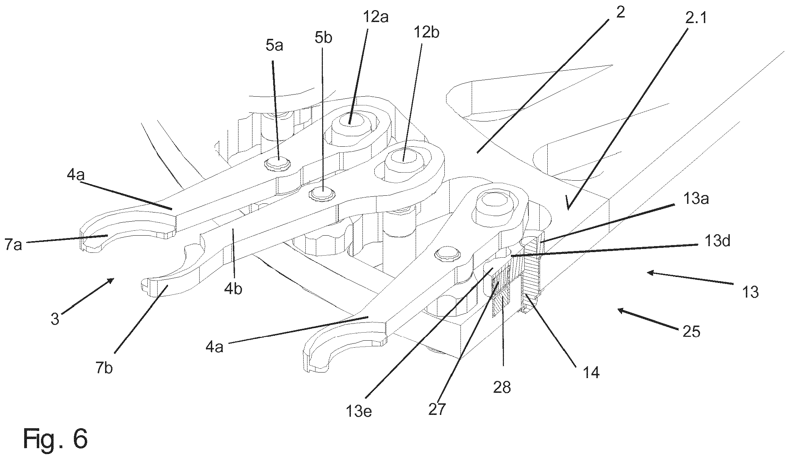

Figur 6 zeigt schematisch in einer perspektivischen Darstellung einen Ausschnitt aus der Transportvorrichtung aus Figur 5. Eine der Behälterklammern 3 ist im Querschnitt dargestellt, wodurch die magnetische Spannvorrichtung 25 besonders deutlich erkennbar ist. Die magnetische Spannvorrichtung 25 umfasst einen am Grundkörper 13a der Steuereinheit 13 angeordneten Tragarm 13d mit einer Magnetkörperaufnahme 13e, die einen ersten Magnetkörper 27 umfasst. Der Tragarm 13d mit der Magnetkörperaufnahme 13e und dem ersten Magnetkörper 27 erstrecken sich von dem Grundkörper 13a der Steuereinheit 13 in Richtung der Greifabschnitte 7a, 7b, d.h. hier in Radialrichtung nach außen. Der Grundkörper 13a ist einstückig mit dem Tragarm 13d und der Magnetkörperaufnahme 13e ausgebildet und drehbar an der Drehachse 14 gelagert.

Der erste Magnetkörper 27 ist in der dargestellten Einbaulage minimal beabstandet zur Oberseite 2.1 des Tragkörpers 2 angeordnet, während der zweite Magnetkörper 28 unbeweglich im Tragkörper 2 positioniert ist. Der erste und zweite Magnetkörper 27, 28 sind hier am Umschaltpunkt dargestellt, an dem sich beide Magnetkörper 27, 28 direkt gegenüberliegen. Die beiden Magnetkörper 27, 28 sind polar so ausgerichtet, dass sie sich abstoßen.

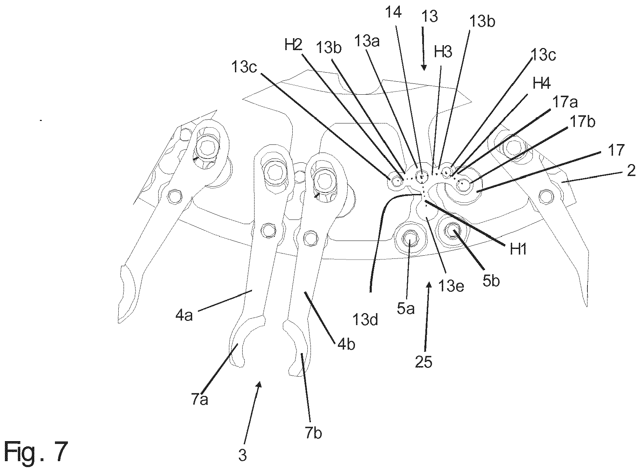

Figur 7 zeigt schematisch in einer Draufsicht einen Ausschnitt der Transportvorrichtung 1 aus Figur 5 und 6. Zur Verdeutlichung des strukturellen Aufbaus der magnetischen Spannvorrichtung 25 wurden bei einer der Behälterklammern 3 die Greifarme 4a, 4b nicht mit dargestellt. Neben den Schwenkachsen 5a, 5b, um die die Greifarme 4a, 4b zwischen der Öffnungsstellung und der Greifstellung verschwenkt werden, ist in Figur 7 deutlich erkennbar, dass an dem weitestgehend ringförmigen Grundkörper 13a der Steuereinheit 13 neben dem Tragarm 13d der Magnetkörperaufnahme 13e auch die Tragarme 13b der Steuerbolzenaufnahmen 13c angreifen. Zudem geht von einer der Steuerbolzenaufnahmen 13c noch ein weiterer Tragarm 17a mit der Aufnahme für die Ansteuervorrichtung 17 ab. Die Steuerbolzenaufnahmen 13b und die Aufnahme 17b der Ansteuervorrichtung 17 sind weitestgehend ringförmig ausgebildet. Über diese Kopplung greifen somit vier Hebelarme H1-H4 (durch gestrichelte Linien dargestellt) an der Drehachse 14 an. Der erste Hebelarm H1 wird gebildet über den Grundkörper 13a, den Tragarm 13d und die Magnetkörperaufnahme 13e. Der zweite und dritte Hebelarm H2, H3 werden jeweils über den Grundkörper 13a, einen der Tragarme 13b und eine der Steuerbolzenaufnahmen 13c und der vierte Hebelarm H4 über den Tragarm 13b mit der Steuerbolzenaufnahme 13c und den davon abgehenden Tragarm 17b mit der Aufnahme 17b der Ansteuervorrichtung 17 gebildet.

Der Grundkörper 13a, die angreifenden Tragarme 13b, 13d, 17a und die dazugehörenden Steuerbolzenaufnahmen 13c, Magnetkörperaufnahme 13e und die Aufnahme 17b der Ansteuervorrichtung 17 sind unbeweglich zueinander, und hier zudem einstückig, ausgebildet. Die beiden Steuerbolzenaufnahmen 13c stehen auf gegenüberliegenden Seiten der Drehachse 14 und somit in einem Winkel von ca. 180° zueinander. Der Tragarm 13d mit Magnetkörperaufnahme 13e ist in einem Winkel von ca. 90° zu den Steuerbolzenaufnahmen angeordnet, d.h., er ist zwischen den Steuerbolzenaufnahmen 13c positioniert. Alle Tragarme 13b, 13d, 17a (mit den dazugehörenden Aufnahmen 13c, 13e, 17b) sind zudem in einer Ebene angeordnet, die in der Einbaulage parallel zur Oberseite 2.2 des Tragkörpers 2 ausgerichtet ist. Bei einer Drehbewegung der Steuereinheit 13, bspw. um die Greifarme 4a, 4b zwischen der Öffnungsstellung und der Greifstellung zu verstellen, drehen sich alle Tragarme 13b, 13d 17a und die dazugehörigen Aufnahmen (Magnetkörperaufnahme 13e, Steuerbolzenaufnahme 13c und Aufnahme 17b der Ansteuervorrichtung 17) mit um die Drehachse 14.

Die beiden Magnetkörper sind so positioniert, dass sich der erste Magnetkörper 27 bei der Drehbewegung der Steuereinheit 13 auf einer Kreisbahn (hier nicht dargestellt) um die Drehachse 14 bewegt und über den zweiten Magnetkörper 28 herüber streicht. Am Umschaltpunkt (siehe Figur 6) mit dem zweiten Magnetkörper stehen sich die beiden Magnetkörper 27, 28 exakt einander gegenüber, hier bezogen auf die Einbaulage in Vertikalrichtung. Aufgrund dessen, dass die beiden Magnetkörper 27, 28 polar so ausgerichtet sind, dass sie sich abstoßen, erfährt die Steuereinheit 13 ausgehend vom Umschaltpunkt immer eine Kraft in Richtung einer Endposition, d.h., entweder in Richtung der Greifstellung der Greifarme 4a, 4b oder in Richtung der Öffnungsstellung der Greifarme 4a, 4b. Dementsprechend muss für die Bewegung der Greifarme 4a, 4b zwischen der Öffnungsstellung und der Greifstellung immer die Kraft der magnetischen Spannvorrichtung 25 überwunden werden. Dies erfolgt bspw. mittels einer oder mehrerer Steuerkurven (hier nicht dargestellt), die an der Ansteuervorrichtung 17 angreifen.

Weiter ist Figur 7 zu entnehmen, dass diese Ausführungsform der Transportvorrichtung 1 kein Federelement 16, keine Zugfeder 16a, 16b, keinen Federtragarm 16c und keine Federaufnahme 16d entsprechend der Ausführungsformen aus den Figuren 1 bis 4 aufweist, wodurch - wie bereits erwähnt - insbesondere die Reinigbarkeit verbessert und die Herstellung und der Betrieb der Vorrichtung kostengünstiger wird. Weiterhin ist ein sehr leichter und schneller Ein-und Ausbau der gesamten Greifeinheit möglich.

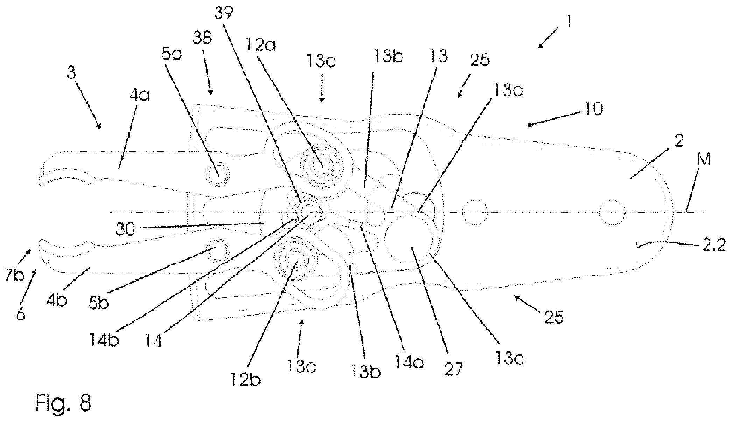

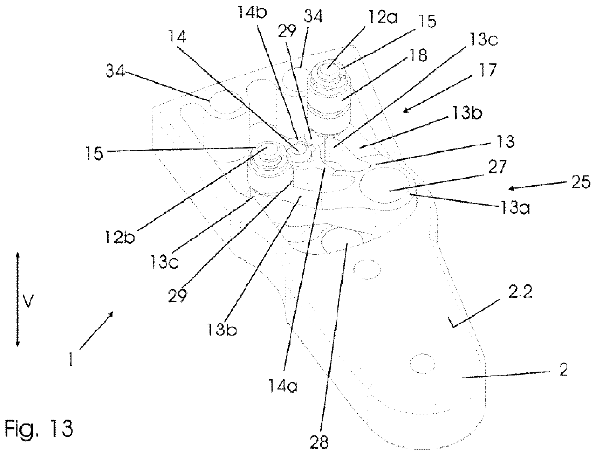

Figur 8 zeigt eine weitere Ausführungsform der Transportvorrichtung 1 mit einem Tragkörper 2 von der Unterseite 2.2. Am Tragkörper 2 sind eine Behälterklammer 3 mit zwei Greifarmen 4a, 4b und eine Steuereinheit 13 angeordnet. Die Steuereinheit 13 weist zwei sich aus dem Grundkörper 13a erstreckende Tragarme 13b auf, die an ihrem jeweiligen dem Grundkörper 13a gegenüberliegenden Ende eine Steuerbolzenaufnahme 13c (siehe Figur 13) mit angeordneten Steuerbolzen 12a, 12b aufweisen.

Die Drehachse 14 ist bei dieser Ausführungsform nicht direkt am Grundkörper 13a der Steuereinheit 13 angeordnet, sondern außermittig an einem sich aus dem Grundkörper 13 erstreckenden Drehachsenarm 14a mit Drehachsenaufnahme 14b. Die Drehachse 14 ist in Richtung quer zur Mittellängsachse M (siehe Figur 8) der Behälterklammer 3 zwischen den Steuerbolzen 12a, 12b angeordnet. Zwischen der Drehachsenaufnahme 14b und beiden Steuerbolzenaufnahmen 13c sind zudem elastische Lager 29 (siehe Figur 13) angeordnet. Die elastischen Lager 29 sind vorgespannt und drücken die Steuerbolzenaufnahmen 13c von der Drehachsenaufnahme 14b weg. Die elastischen Lager 29 sind hier als elastische Rundschnurringabschnitte ausgebildet.

Die Drehachsenaufnahme 14a ist als Gleitlager mit Rillung 38 ausgebildet, welches sich bei der Drehbewegung der Steuereinheit 13 um die Drehachse 14 dreht. Aufgrund der Rillung 38 liegen zwischen der Drehachse 14 und der Drehachsenaufnahme 14b besonders kleine Berührungsflächen 39 vor. Bei der Drehbewegung der Drehachsenaufnahme 14b an der Drehachse 14 liegen die Berührungsflächen 39 somit abwechselnd frei und sind dadurch besonders einfach spülbar.

Die Greifarme 4a, 4b der Behälterklammer 3 sind jeweils um eine Schwenkachse 5a, 5b drehbar am Tragkörper 2 gelagert. Neben den an einem äußeren Ende 6 angeordneten Greifabschnitten 7a, 7b zum Erfassen eines Behälters (hier nicht dargestellt) weisen die Greifarme 4a, 4b an einem den Greifabschnitten 7a, 7b gegenüberliegenden inneren Ende 10 jeweils eine Steuernut 11a, 11b auf. Die Steuernuten 11a, 11b sind als geschlossene Steuernuten 11a, 11b ausgebildet. Die Steuerbolzen 12a, 12b sind in den Steuernuten 11a, 11b beweglich gelagert. Hierfür sind an den Steuerbolzen 12a, 12b Steuerrollen 31 angeordnet.

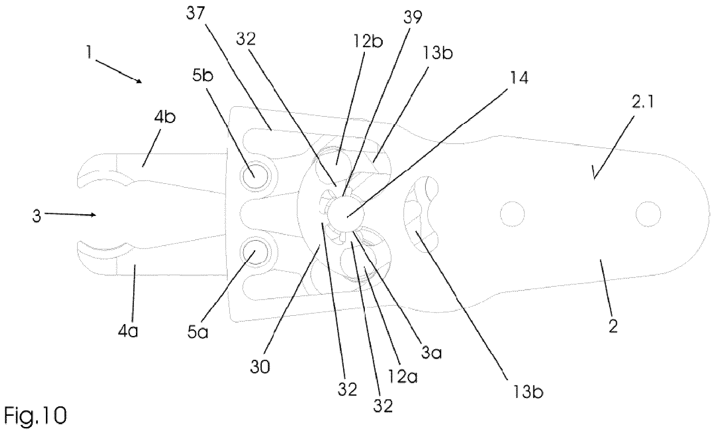

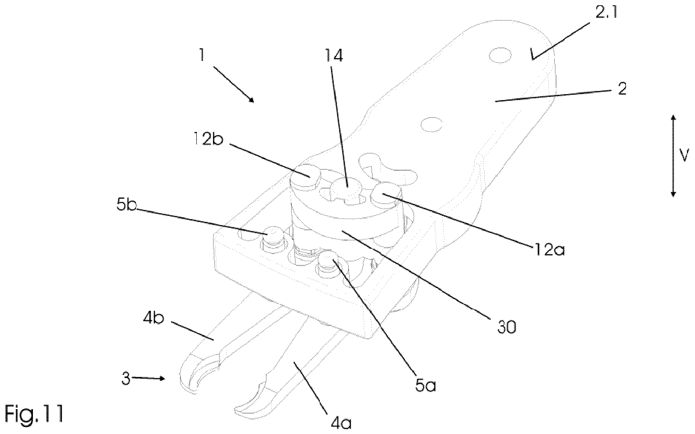

In Figur 10 ist eine Brücke 30 (siehe auch Figur 10) erkennbar, die die beiden Steuerbolzen 12a, 12b verbindet. Die Brücke 30 ist in Vertikalrichtung V (siehe Figur 11) oberhalb der Greifarme 4a, 4b positioniert. Die Brücke 30 bildet mit den beiden Tragarmen 13b und dem Grundkörper 13 einen Rahmen aus, der den Abstand der beiden Steuerbolzen 12a, 12b, bzw. der an den Steuerbolzen 12a, 12b angeordneten Steuerrollen 31 konstant hält. Aufgrund der elastischen Lagerung 29 zwischen den Steuerbolzenaufnahmen 13c und der Drehachsenaufnahme 14b kann der Rahmen beim Auftreten von seitlichen Kräften auf die Behälterklammer 3 geringfügig ausweichen, so dass Beschädigungen im Betrieb durch seitliche Kräfte vermieden werden. Nach einer Auslenkung aufgrund von seitlichen Kräften wird der Rahmen mit den Steuerbolzenaufnahmen 13c durch die vorgespannten elastischen Lager 29 wieder in seine normale Ausgangsposition zurückbewegt.

Die Brücke 30 ist über zueinander beabstandete Lagerabschnitte 32 an der Drehachse 14 drehbar gelagert. Die Lagerung über die Lagerabschnitte 32 ist der Gleitlagerung der Drehachsenaufnahme 14b ähnlich, so dass auch hier besonders kleinen Berührungsflächen 39 der beabstandeten Lagerabschnitte 32 aufgrund der Drehbewegung der Brücke 30 an der Drehachse 14 abwechselnd freiliegen und besonders einfach spülbar sind.

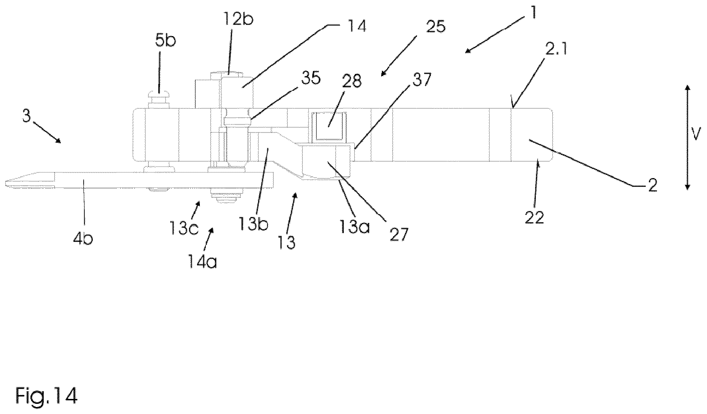

Die Drehachse 14 ist entlang ihrer Längsachsenrichtung stufig ausgebildet und weist im Bereich der Lagerabschnitte 32 einen größeren Durchmesser auf als im Bereich der Drehachsenaufnahme 14b aus (siehe Figur 14).

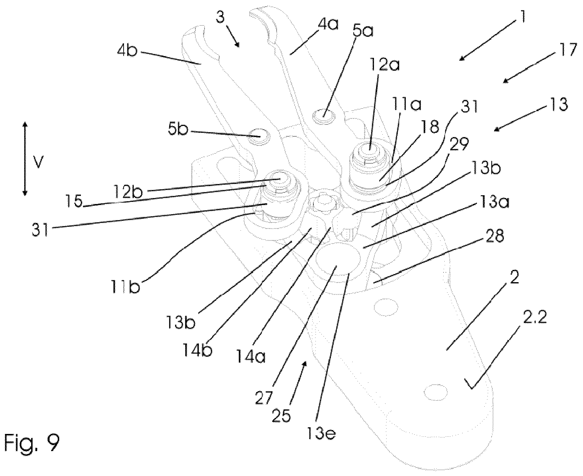

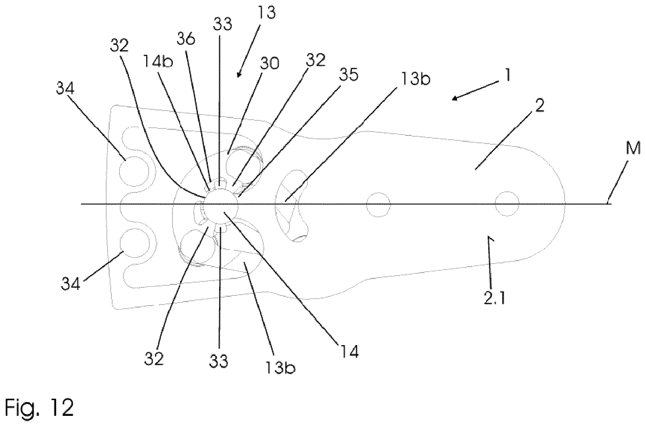

Zum Erzeugen einer Vorspannung der Greifarme 4a, 4b ist eine magnetische Spannvorrichtung 25 vorgesehen. Die Spannvorrichtung 25 umfasst eine Magnetkörperaufnahme 13e mit einem ersten Magnetkörper 27, der direkt im Grundkörper 13a der Steuereinheit 13 angeordnet ist. Ein zweiter Magnetkörper 28 ist im Tragkörper 2 angeordnet. Die beiden Magnetkörper 27, 28 liegen auf einer gemeinsamen Kreisbahn um die Drehachse 14, jedoch vertikal versetzt zueinander. Sie sind sich gegenseitig abstoßend angeordnet, wodurch eine Vorspannung der Greifarme 4a, 4b in die jeweilige Öffnungsstellung oder Greifstellung bewirkt wird. Figur 12 zeigt den Tragkörper 2 und die Steuereinheit 13 aus den Figuren 8 bis 11. Die Greifarme 4a, 4b wurden der besseren Übersicht halber weggelassen. Der Tragkörper 2 weist neben zwei Schwenkachsenlagern 34 zur Aufnahme der Schwenkachsen 5a, 5b ein Drehachsenlager 35 zur Aufnahme der Drehachse 14 auf. Die Schwenkachsen 5a, 5b werden beispielsweise mittels Splintringen 15 befestigt.

Zur Befestigung der Steuereinheit 13 mit der Brücke 30 sind an dem Tragkörper 2, hier an dem Drehachsenlager 35, zwei Sperrelemente 33 angeformt. Dabei sind die Sperrelemente 33 und die Lagerabschnitte 32 der Brücke 30 derart aufeinander abgestimmt, dass in einer Entnahmeposition (siehe Figur 12) der Steuereinheit 13 mit der Brücke 30 und bei vorheriger Demontage der Greifarme 4a, 4b die Brücke 30 an den Sperrelementen 33 vertikal in Richtung der Unterseite 2.2 vorbei bewegt werden kann. Das heißt, dass die Steuereinheit 13 mit der Brücke 30 somit vertikal in Richtung der Unterseite 2.2 besonders einfach vom Tragkörper 2 demontiert und montiert werden kann. Zudem sind für die Befestigung der Steuereinheit 13 mit der Brücke 30 keine separaten Befestigungsmittel notwendig.

Figur 13 zeigt die Ausführungsform der Vorrichtung 1 aus den Figuren 8 bis 12 ohne Greifarme 4a, 4b. Neben dem Tragkörper 2 und der Steuereinheit 13 ist deutlich eine Ansteuervorrichtung 17 zu erkennen. Für die Ansteuervorrichtung 17 wurde einer der Steuerbolzen 12a in Vertikalrichtung V in Richtung der Unterseite 2.2, d.h. in der Einbaulage nach unten, verlängert ausgeführt. Der verlängerte Steuerbolzen 12a dient als Aufnahme für eine zum Angreifen einer Steuerkurve (hier nicht dargestellt) ausgebildeten Steuerrolle 18. Die Steuerrolle 18 zum Ansteuern durch eine Steuerkurve und eine in der Steuernut 11a, 11b gelagerte Steuerrolle 31 an einem Steuerbolzen 12a sind somit an einem gemeinsamen Steuerbolzen 12a angelagert.

Figur 14 zeigt die Ausführungsform der Vorrichtung 1 aus den Figuren 8 bis 13 im Querschnitt. Deutlich zu sehen ist die stufige Ausbildung der Drehachse 14 und ausgehend von der Unterseite 2.2 eine Aussparung/Öffnung 37 im Tragkörper 2, in der die Steuereinheit 13 zumindest abschnittsweise gelagert ist. Die Steuereinheit 13 bzw. die Tragarme 13b der Steuerbolzen 12a, 12b und der Drehachsenarm 14a der Drehachse 14 sind zudem winkelig ausgebildet, so dass der Grundkörper 13a der Steuereinheit 13 in Vertikalrichtung V zu den Steuerbolzenaufnahmen 13c und der Drehachsenaufnahme 14a versetzt angeordnet ist.

Durch die winkelige Ausbildung können die Steuerbolzenaufnahmen 13c und die Drehachsenaufnahme 14a zumindest weitestgehend zwischen der Unter- und Oberseite 2.1, 2.2 des Tragkörpers 2 angeordnet werden, während der Grundkörper 13a über die Unterseite 2.2 des Tragkörpers 2 bis in eine horizontale Ebene (hier nicht dargestellt) der Greifarme 4a, 4b ragt. Hierdurch ist die Transportvorrichtung 1 in Vertikalrichtung V besonders schmal ausgebildet.

Auch die Ausführungsform aus Figur 8 bis 14 weist wieder ein Hebelarmsystem auf, bei dem über einen Hebelarm ausgehend von der Ansteuervorrichtung 17 und einem ersten Steuerbolzen und über den Grundkörper 13a die von der Steuerkurve eingeleitete Kraft zum Drehen der Steuereinheit 13 auf den die Drehachse 14 übertragen wird. Ausgehend von der Drehachse dann die Kraftübertragung über weitere Hebelarme auf die den zweiten Steuerbolzen bzw. auf den Grundkörper 13a.

### Bezugszeichenliste

- 1: Transportvorrichtung
- 2: Tragkörper
- 2.1: Oberseite des Tragkörpers
- 2.2: Unterseite des Tragkörpers
- 3: Behälterklammer
- 4a, 4b: Greifarme
- 5a, 5b: Schwenkachse
- 6: äußeres Ende Greifarme
- 7a, 7b: Greifabschnitte
- 8: Getränkebehälter
- 8a: Flaschenhals
- 9: Neckring
- 10: inneres Ende Greifarme
- 11a, 11b: Steuernuten
- 12a, 12b: Steuerbolzen
- 13: Steuereinheit
- 13a: Grundkörper
- 13b: Tragarme
- 13c: Steuerbolzenaufnahme
- 13d: Tragarm Magnetkörperaufnahme
- 13e: Magnetkörperaufnahme
- 14: Drehachse
- 14a: Drehachsenarm
- 14b: Drehachsenaufnahme
- 15: Splintringe
- 16: Federelement
- 16a, 16b: erstes und zweites Ende Zugfeder
- 16c: Federtragarm
- 16d: Federaufnahme
- 17: Ansteuervorrichtung
- 17a: Tragarm Ansteuervorrichtung
- 17b: Aufnahme Ansteuervorrichtung
- 18: Steuerrolle
- 19: Steuerkurve
- 20: Befestigungsbolzen
- 21: Kapselung
- 22a, 22b: Mittellängsachsen Steuerbolzen
- 23: Drehachse Steuerrolle
- 24: Öffnung im Tragkörper
- 25: magnetische Spannvorrichtung
- 26: Transportstern
- 27: erster Magnetkörper
- 28: zweiter Magnetkörper
- 29: elastisches Lager
- 30: Brücke
- 31: Steuerrolle
- 32: Lagerabschnitte
- 33: Sperrelement
- 34: Steuerbolzenlager
- 35: Drehachsenlager
- 36: Zwischenraum
- 37: Öffnung / Aussparung
- 38: Rillung
- 39: Berührungsflächen

- V: Vertikalrichtung
- H: Horizontalrichtung
- M: Mittellängsachse Behälterklammer
- LG: Längsachsenrichtung Greifarme
- H1: erster Hebelarm
- H2: zweiter Hebelarm
- H3: dritter Hebelarm
- H4: vierter Hebelarm

## Patentansprüche

1. Vorrichtung zum Transport von Behältern, umfassend
- einen Tragkörper (2) mit einer zwei Greifarme (4a, 4b) aufweisenden Behälterklammer (3) zum Halten eines Behälters (8) an dessen Schulter-, Hals- oder Neckbereich, wobei jeder Greifarm (4a, 4b) um eine Schwenkachse (5a, 5b), idealerweise eine vertikale Schwenkachse (5a, 5b) verschwenkbar an dem Tragkörper (2) gelagert ist,
- eine um eine Drehachse (14) drehbare, am Tragkörper (2) gelagerte Steuereinheit (13) zum Ansteuern der Greifarme (4a, 4b),
- eine mit der Steuereinheit (13) gekoppelte Ansteuervorrichtung (17) zum Ansteuern durch eine Steuerkurve (19),
wobei
- jeder Greifarm (4a, 4b) am äußeren Ende (6) einen Greifabschnitt (7a, 7b) zur Aufnahme des Behälters (8) und an einem dem äußeren Ende (6) gegenüberliegenden inneren Ende (10) jeweils eine Steuernut (11a, 11b) aufweist,
- zwischen den beiden Enden (6, 10) die jeweilige Schwenkachse (5a, 5b) angeordnet ist,
- die Steuereinheit (13) einen drehbar gelagerten Grundkörper (13a) mit angeordneten Steuerbolzen (12a, 12b) umfasst,
- jeder Steuerbolzen (12a, 12b) in die jeweilige Steuernut (11a, 11b) der Greifarme (4a, 4b) eintaucht bzw. mit dieser formschlüssig verbunden ist,
- mit einer Drehbewegung der Steuereinheit (13) die Steuerbolzen (12a, 12b) in den Steuernuten (11a, 11b) bewegt, insbesondere in entgegengesetzter Richtung bewegt, und die Greifarme (4a, 4b) zwischen einer Öffnungsstellung und einer Greifstellung um die Schwenkachse (5a, 5b) verschwenkt werden.

2. Vorrichtung nach Anspruch 1, **gekennzeichnet durch** sich aus dem Grundkörper (13a) erstreckenden Tragarmen (13b), wobei an jedem Tragarm (13b) ein Steuerbolzen (12a, 12b) angeordnet ist.

3. Vorrichtung nach einem der vorhergehenden Ansprüche, **dadurch gekennzeichnet, dass** die Steuernuten (11a, 11b) im Wesentlichen oder zumindest abschnittsweise bogenförmig ausgebildet sind.

4. Vorrichtung nach einem der vorhergehenden Ansprüche, **dadurch gekennzeichnet, dass** die Steuerbolzen (12a, 12b), die Schwenkachsen (5a, 5b) und die Drehachse (14) parallel angeordnet sind.

5. Vorrichtung nach einem der vorhergehenden Ansprüche, **dadurch gekennzeichnet, dass** der Tragkörper (2) eine Oberseite (2.1) und eine Unterseite (2.2) und mindestens für jede Behälterklammer (3) eine Aussparung oder Öffnung (24) aufweist, und wobei die Steuereinheit (13) und/oder die Ansteuervorrichtung (17) mindestens teilweise in der jeweiligen Öffnung (24) und zwischen der Oberseite (2.1) und der Unterseite (2.2) angeordnet sind.

6. Vorrichtung nach einem der vorhergehenden Ansprüche, **dadurch gekennzeichnet, dass** die Drehachse (14) der Steuereinheit (13) zwischen den Steuerbolzen (12a, 12b) angeordnet ist, wobei diese Lage der Drehachse (14) auch außerhalb derjenigen Strecke liegen kann, die als kürzeste Verbindung lotrecht zu und zwischen den beiden Steuerbolzen (12a, 12b) verläuft.

7. Vorrichtung nach einem der vorhergehenden Ansprüche, **dadurch gekennzeichnet, dass** ein sich aus dem Grundkörper (13a) erstreckender Drehachsenarm (14a) mit einer Drehachsenaufnahme (14b) angeordnet ist.

8. Vorrichtung nach einem der vorhergehenden Ansprüche, **dadurch gekennzeichnet, dass** eine die Steuerbolzen (12a, 12b) verbindende Brücke (30) angeordnet ist.

9. Vorrichtung nach einem der vorhergehenden Ansprüche, **gekennzeichnet durch** ein Federelement (16), das die Behälterklammer (3) auf die Greifstellung hin vorspannt, wobei das Federelement (16) derart angeordnet ist, dass das Verschwenken der Steuereinheit (13) zum Öffnen der Behälterklammer (3) gegen die Kraft des Federelements (16) erfolgt.

10. Vorrichtung nach Anspruch 9, **dadurch gekennzeichnet, dass** ein Federtragarm (16c) zum Befestigen des Federelements (16) angeordnet ist.

11. Vorrichtung nach einem der Ansprüche 9 oder 10, **dadurch gekennzeichnet, dass** das Federelement (16) und eine Steuerrolle (18) unterhalb der Greifarme (4a, 4b) angeordnet sind.

12. Vorrichtung nach einem der vorhergehenden Ansprüche, **gekennzeichnet durch** eine magnetische Spannvorrichtung (25), die die Behälterklammer (3) auf die Greifstellung hin vorspannt, wobei die magnetische Spannvorrichtung (25) derart angeordnet ist, dass das Verschwenken der Steuereinheit (13) zum Öffnen der Behälterklammer (3) in einem ersten Winkelbereich in Schwenkrichtung gegen die Kraft der magnetischen Spannvorrichtung (25) erfolgt, wobei am Ende dieses ersten Winkels die maximale abstoßende und der Schwenkrichtung entgegenstehende Magnetkraft (Totpunkt) vorliegt und überstrichen werden kann, wobei hieran anschließend die Steuereinheit (13) einen zweiten Winkelbereich durchläuft, in welchem die dann in Schwenkrichtung wirkende Magnetkraft die Spannvorrichtung (25) in die Öffnungsposition bewegt.

13. Vorrichtung nach Anspruch 12, **dadurch gekennzeichnet, dass** die magnetische Spannvorrichtung (25) einen an der Steuereinheit (13) angeordneten ersten Magnetkörper (27) und einen an dem Tragkörper (2) angeordneten zweiten Magnetkörper (28) aufweist, wobei die Magnetkörper (27, 28) bezüglich ihrer Polarität und Nähe so angeordnet sind, dass sie sich gegenseitig abstoßen.

14. Vorrichtung nach einem der Ansprüche 12 oder 13, **dadurch gekennzeichnet, dass** die magnetische Spannvorrichtung (25) zusätzlich zu den abstoßend wirkenden Kräften des Magnetpaars noch durch weitere Magnete, die anziehend wirken, die Haltekraft in der geschlossenen und/oder in der offenen Stellung erhöht werden kann.

15. Vorrichtung nach einem der Ansprüche 12 bis 14, **dadurch gekennzeichnet, dass** am Tragkörper (2) im Bereich einer der beiden Endstellungen der Steuereinheit (13) mindestens ein weiterer Magnet derart angeordnet ist, dass dieses den Magnetkörper (27) der Steuereinheit (13) in einer der jeweiligen Endstellungen magnetisch anzieht.

16. Vorrichtung nach einem der vorhergehenden Ansprüche, **dadurch gekennzeichnet, dass** die Ansteuervorrichtung (17) an einem Steuerbolzen (12a, 12b) angreift.

17. Vorrichtung nach einem der vorherigen Ansprüche, **dadurch gekennzeichnet, dass** der Tragkörper (2) eine Sternplatte oder ein Sternplattensegment und/oder eine ein- oder mehrteilige Baugruppe zur Befestigung an einer Sternplatte oder Sternplattensegment ist.

## Claims

1. Device for transporting containers, comprising
- a carrying body (2) with a container clamp (3) comprising two gripping arms (4a, 4b) for holding a container (8) by its shoulder, neck, or neck region, wherein each gripping arm (4a, 4b) is mounted on the carrying body (2) so as to be pivotable about a pivot axis (5a, 5b), ideally a vertical pivot axis (5a, 5b), on the carrying body (2),
- a control unit (13) which is mounted so as to be rotatable about an axis of rotation (14) in order to actuate the gripping arms (4a, 4b),
- an actuating device (17) coupled to the control unit (13) for actuating by means of a control cam (19),
wherein
- each gripping arm (4a, 4b) comprises at the outer end (6) a gripping portion (7a, 7b) for receiving the container (8), and at an inner end (10), opposite the outer end (6), in each case a control slot (11a, 11b),
- the respective pivot axis (5a, 5b) is arranged between the two ends (6, 10),
- the control unit (13) comprises a rotatably mounted basic body (13a) with control pins (12a, 12b) arranged on it,
- each control (12a, 12b) is immersed into the respective control slot (11a, 11b) of the gripping arms (4a, 4b) or is connected to this in a positive fit,
- with a rotational movement of the control unit (13), the control pins (12a, 12b) are moved in the control slots (11a, 11b), in particular in opposing directions, and the gripping arms 9(4a, 4b) are pivoted about the pivot axis (5a, 5b) between an open position and a gripping position.

2. Device according to claim 1, **characterised by** carrying arms (13b) extending out of the basic body (13a), wherein a control pin (12a, 12b) is arranged at each carrying arm (13b).

3. Device according to any one of the preceding claims, **characterised in that** the control pins (11a, 11b) are configured essentially or at least in sections as curve-shaped.

4. Device according to any one of the preceding claims, **characterised in that** the control pins (12a, 12b), the pivot axes (5a, 5b) and the axis of rotation (14) are arranged in parallel.

5. Device according to any one of the preceding claims, **characterised in that** the carrying body (2) comprises an upper side (2)(2.1) and a lower side (2.2), and comprises for each container clamp (3) a cut-out or opening (24), and wherein the control unit (13) and/or the actuating device (17) are arranged at least partially in the respective opening (24) and between the upper side (2.1) and the lower side (2.2).

6. Device according to any one of the preceding claims, **characterised in that** the pivot axis (14) of the control unit (13) is arranged between the control pins (12a, 12b), wherein this location of the axis of rotation (14) can also lie outside that stretch which, as the shortest connection, runs perpendicular to and between the two control pins (12a, 12b).

7. Device according to any one of the preceding claims, **characterised in that** a rotation axis arm (14a) extending out of the basic body (13a) is arranged with a rotation axis receiver (14b).

8. Device according to any one of the preceding claims, **characterised in that** a bridge (30) is arranged connecting the control pins (12a, 12b).

9. Device according to any one of the preceding claims, **characterised by** a spring element (16), which prestresses the container clamps (3) towards the gripping position, wherein the spring element (16) is arranged in such a way that the pivoting of the control unit (13) to open the container clamps (3) takes place against the force of the spring element (16).

10. Device according to claim 9, **characterised in that** a spring carrying arm (16c) is arranged for securing the spring element (16).

11. Device according to any of claims 9 or 10, **characterised in that** the spring element (16) and a control roller (18) are arranged beneath the gripping arms (4a, 4c4b).

12. Device according to any one of the preceding claims, **characterised by** a magnetic tensioning device (25), which pretensions the container clamps (3) towards the gripping position, wherein the magnetic tensioning device (25) is arranged in such a manner that the pivoting of the control unit (13) for opening the container clamps (3) takes place in a first angle range in the pivot direction against the force of the magnetic tensioning device (25), wherein, at the end of this first angle, the maximum repelling magnetic force (dead point) opposing the pivot direction is located and can be exceeded, wherein, following this, the control unit (13) runs through a second angle range, in which the magnetic force then taking effect in the pivot direction moves the tensioning device (25) into the opening position.

13. Device according to claim 12, **characterised in that** the magnetic tensioning device (25) comprises a first magnetic body (27) arranged at the control unit (13), and a second magnetic body (28) arranged at the carrying body (2), wherein the magnetic bodies (27, 28) are arranged in respect of their polarity and proximity in such a way that they repel one another.

14. Device according to any one of claims 12 or 13, **characterised in that** the magnetic tensioning device (25) takes effect, in addition to the repelling forces of the pair of magnets, by means of further magnets, which have attracting force, such that the retaining force in the closed position and/or in the open position can be increased.

15. Device according to any one of claims 12 to 14, **characterised in that** at least one further magnet is arranged at the carrier body (2) in the region of one of the two end positions of the control unit (13), in such a way that it magnetically attracts the magnetic body (27) of the control unit (13) in one of the respective end positions.

16. Device according to any one of the preceding claims, **characterised in that** the actuating device (17) engages at a control pin (12a, 12b).

17. Device according to any one of the preceding claims, **characterised in that** the carrying body (2) is a star plate or a star plate segment and/or a one-part or multi-part module for securing to a star plate or a star plate segment.

## Revendications

1. Dispositif de transport de contenants, comprenant
- un corps de support (2) avec une pince de contenant (3) présentant deux bras de préhension (4a, 4b) pour maintenir un contenant (8) sur sa zone d'épaule, de col, de goulot, dans lequel chaque bras de préhension (4a, 4b) est monté sur le corps de support (2) de manière à pouvoir pivoter autour d'un axe de pivotement (5a, 5b), idéalement un axe de pivotement (5a, 5b) vertical,
- une unité de commande (13) montée sur le corps de support (2), pouvant tourner autour d'un axe de rotation (14), pour piloter les bras de préhension (4a, 4b),
- un dispositif de pilotage (17) couplé à l'unité de commande (13) pour le pilotage par une came de commande (19),
dans lequel
- chaque bras de préhension (4a, 4b) présente sur l'extrémité extérieure (6) une section de préhension (7a, 7b) pour loger le contenant (8) et sur une extrémité intérieure (10) faisant face à l'extrémité extérieure (6), respectivement une rainure de commande (11a, 11b),
- l'axe de pivotement (5a, 5b) concerné est disposé entre les deux extrémités (6, 10),
- l'unité de commande (13) comprend un corps de base (13a) monté de manière à pouvoir tourner avec des boulons de commande (12a, 12b) disposés,
- chaque boulon de commande (12a, 12b) s'enfonce dans la rainure de commande (11a, 11b) concernée des bras de préhension (4a, 4b) ou est relié par complémentarité de forme à celle-ci,
- les boulons de commande (12a, 12b) sont déplacés avec un déplacement par rotation de l'unité de commande (13) dans les rainures de commande (11a, 11b), en particulier les déplace dans une direction opposée, et les bras de préhension (4a, 4b) sont pivotés autour de l'axe de pivotement (5a, 5b) entre une position d'ouverture et une position de préhension.

2. Dispositif selon la revendication 1, **caractérisé par** des bras de support (13b) s'étendant depuis le corps de base (13a), dans lequel un boulon de commande (12a, 12b) est disposé sur chaque bras de support (13b).

3. Dispositif selon l'une quelconque des revendications précédentes, **caractérisé en ce que** les rainures de commande (11a, 11b) sont réalisées sensiblement ou au moins par endroits en forme d'arc.

4. Dispositif selon l'une quelconque des revendications précédentes, **caractérisé en ce que** les boulons de commande (12a, 12b), les axes de pivotement (5a, 5b) et l'axe de rotation (14) sont disposés de manière parallèle.

5. Dispositif selon l'une quelconque des revendications précédentes, **caractérisé en ce que** le corps de support (2) présente un côté supérieur (2.1) et un côté inférieur (2.2) et au moins pour chaque pince de contenant (3) un évidement ou une ouverture (24), et dans lequel l'unité de commande (13) et/ou le dispositif de pilotage (17) sont disposés au moins en partie dans l'ouverture (24) concernée et entre le côté supérieur (2.1) et le côté inférieur (2.2).

6. Dispositif selon l'une quelconque des revendications précédentes, **caractérisé en ce que** l'axe de rotation (14) de l'unité de commande (13) est disposé entre les boulons de commande (12a, 12b), dans lequel cette position de l'axe de rotation (14) peut se situer également à l'extérieur du trajet, qui précisément s'étend, en tant que liaison la plus courte, de manière perpendiculaire à et entre les deux boulons de commande (12a, 12b).

7. Dispositif selon l'une quelconque des revendications précédentes, **caractérisé en ce qu'**un bras d'axe de rotation (14a) s'étendant depuis le corps de base (13a) est disposé avec un logement d'axe de rotation (14b).

8. Dispositif selon l'une quelconque des revendications précédentes, **caractérisé en ce qu'**un pont (30) reliant les boulons de commande (12a, 12b) est disposé.

9. Dispositif selon l'une quelconque des revendications précédentes, **caractérisé par** un élément de ressort (16), qui précontraint la pince de contenant (3) en direction de la position de préhension, dans lequel l'élément de ressort (16) est disposé de telle manière que le pivotement de l'unité de commande (13) est effectué pour ouvrir la pince de contenant (3) à l'encontre de la force de l'élément de ressort (16).

10. Dispositif selon la revendication 9, **caractérisé en ce qu'**un bras de support de ressort (16c) est disposé pour fixer l'élément de ressort (16).

11. Dispositif selon l'une quelconque des revendications 9 ou 10, **caractérisé en ce que** l'élément de ressort (16) et un galet de commande (18) sont disposés sous les bras de préhension (4a, 4b).

12. Dispositif selon l'une quelconque des revendications précédentes, **caractérisé par** un dispositif de serrage (25) magnétique, qui précontraint la pince de contenant (3) en direction de la position de préhension, dans lequel le dispositif de serrage (25) magnétique est disposé de telle manière que le pivotement de l'unité de commande (13) est effectué pour ouvrir la pince de contenant (3) dans une première plage angulaire dans la direction de pivotement à l'encontre de la force du dispositif de serrage (25) magnétique, dans lequel la force magnétique (point mort) repoussante maximale et contrecarrant la direction de pivotement est présente et peut être balayée sur l'extrémité dudit premier angle, dans lequel l'unité de commande (13) traverse immédiatement après une deuxième plage angulaire, dans laquelle la force magnétique agissant alors dans la direction de pivotement déplace le dispositif de serrage (25) dans la position d'ouverture.

13. Dispositif selon la revendication 12, **caractérisé en ce que** le dispositif de serrage (25) magnétique présente un premier corps magnétique (27) disposé sur l'unité de commande (13) et un deuxième corps magnétique (28) disposé sur le corps de support (2), dans lequel les corps magnétiques (27, 28) sont disposés par rapport à leur polarité et proximité de telle sorte qu'ils se repoussent mutuellement.

14. Dispositif selon l'une quelconque des revendications 12 ou 13, **caractérisé en ce que** le dispositif de serrage (25) magnétique peut augmenter, en plus des forces, agissant de manière repoussante, de la paire d'aimants, encore par d'autres aimants qui ont une action d'attraction, la force de maintien dans la position fermée et/ou dans la position ouverte.

15. Dispositif selon l'une quelconque des revendications 12 à 14, **caractérisé en ce qu'**est disposé, sur le corps de support (2) dans la zone d'une des deux positions finales de l'unité de commande (13), au moins un autre aimant de telle manière qu'il attire magnétiquement le corps magnétique (27) de l'unité de commande (13) dans une des positions finales concernées.

16. Dispositif selon l'une quelconque des revendications précédentes, **caractérisé en ce que** le dispositif de pilotage (17) s'engage sur un boulon de commande (12a, 12b).

17. Dispositif selon l'une quelconque des revendications précédentes, **caractérisé en ce que** le corps de support (2) est un plateau en étoile ou un segment de plateau en étoile et/ou un module en une ou en plusieurs parties destiné à être fixé sur un plateau d'étoile ou un segment de plateau d'étoile.
